# EUROPÄISCHE PATENTSCHRIFT

(11) **EP 4 136 023 B1**
(45) Veröffentlichungstag und Bekanntmachung des Hinweises auf die Patenterteilung: **13.11.2024**
(21) Anmeldenummer: 21720207.6
(22) Anmeldetag: 15.04.2021
(51) Int. Cl.: B64C 27/68, F16H 49/00, B64C 13/28, B64C 13/50

(54) **AKTUATOR FÜR LUFTFAHRTANWENDUNGEN**
ACTUATOR FOR AVIATION APPLICATIONS
ACTIONNEUR POUR APPLICATIONS AÉRONAUTIQUES

(30) Priorität: 17.04.2020 DE 102020204915
(43) Veröffentlichungstag der Anmeldung: 22.02.2023
(73) Patentinhaber: Airbus Helicopters Technik GmbH, 34379 Calden (DE)
(72) Erfinder: HAAR, Jan, 34292 Ahnatal (DE); ARNOLD, Uwe, 34132 Kassel (DE); MEUNIER, Martin, 34119 Kassel (DE); WINTJEN, Carsten, 34393 Grebenstein (DE); MÜLLER, Matthias, 34131 Kassel (DE); PFLÜGER, Werner, 34292 Ahnatal (DE)
(74) Vertreter: GPI Brevets
(86) Internationale Anmeldenummer: PCT/EP2021/059802
(87) Internationale Veröffentlichungsnummer: WO 2021/209560

(56) Entgegenhaltungen:
- US-A- 3 986 412
- US-A1- 2010 038 478
- US-A1- 2013 249 444
- US-A1- 2014 033 840
- US-A1- 2014 076 252
- US-A1- 2017 350 491
- US-A1- 2019 382 108
- US-B1- 10 077 102

## Beschreibung

Die Erfindung betrifft einen Aktuator für Luftfahrtanwendungen, insbesondere für eine Rotorblattverstellung eines Hubschraubers, umfassend eine elektromechanische Antriebseinrichtung, welche über ein Getriebe mit einem Abtrieb verbunden ist, wobei die Antriebseinrichtung in unabhängig voneinander betreibbare Teilantriebe aufgeteilt ist. Ein solcher Aktuator ist sowohl für Anwendungen in einem Hubschrauber als auch in einem Flugzeug geeignet.

Bei Luftfahrzeugen kommen Aktuatoren zur Anwendung, um Steuervorgaben eines Piloten in entsprechende Steuerfunktionen umzusetzen. So werden Aktuatoren beispielsweise bei Hubschraubern zur Rotorblattverstellung vorgesehen und leiten beispielsweise im Bereich einer Taumelscheibe gezielt deren axiale Verschiebung zu einem Rotormast und auch deren Neigung quer zum Rotormast ein, so dass im erstgenannten Fall eine kollektive Blattverstellung von Rotorblättern und im zweitgenannten Fall eine zyklische Blattverstellung realisierbar ist. Da ein Ausfall von Aktuatoren, je nachdem welche Steuervorgaben über diese umzusetzen sind, im schlimmsten Fall einen Absturz des jeweiligen Luftfahrzeuges zur Folge haben kann, sind Aktuatoren als redundante Systeme auszuführen, deren zumindest verminderte Funktionsfähigkeit auch bei Ausfall einzelner Komponenten noch sicherzustellen ist.

Aus DE 10 2015 203 411 A1 ist ein Aktuator für Luftfahrtanwendungen bekannt und DE 10 2015 203 411 A1 offenbart einen Aktuator für eine Rotorblattverstellung eines Hubschraubers, umfassend eine elektromechanische Antriebseinrichtung, welche über ein nachgeschaltetes Getriebe mit einem Abtrieb verbunden ist. Die Antriebseinrichtung ist in unabhängig voneinander betreibbare Teilantriebe aufgeteilt. Um eine Schadenanfälligkeit des Aktuators zu vermindern, sind zumindest zwei Teilantriebe räumlich voneinander getrennt, indem das Getriebe zwischen diesen Teilantrieben vorgesehen ist. Als Getriebe ist ein Planetengetriebe oder ein Zykloidgetriebe vorgesehen.

Die US 2010/0150719 A1 offenbart einen Aktuator für eine Rotorblattverstellung bei einem Hubschrauber, wobei sich dieser Aktuator aus einer elektromechanischen Antriebseinrichtung und einem nachgeschalteten Getriebe zusammensetzt. Die Antriebseinrichtung ist dabei als redundanter, mehrphasiger Elektromotor ausgeführt, welcher dementsprechend mehrere unabhängig voneinander betreibbare Teilantriebe in einem Gehäuse vereint.

Die US 3 986 412 A beschreibt einen Aktuator mit einem Gehäuse, das aus koaxialen komplementären Gehäuseteilen besteht, die jeweils an einem stationären Element gegen Drehung gehalten werden. Der Aktuator umfasst zum Antrieb einer rohrförmigen Abtriebswelle zwei gekoppelte Planetenuntersetzungsgetriebe, die von zwei separaten Motoren angetrieben werden. Stator und Rahmen eines ersten Motors sind an einem ersten Gehäuseteil befestigt, während Stator und Rahmen eines zweiten Motors an der rohrförmigen Abtriebswelle befestigt sind, die drehbeweglich in einem zweiten Gehäuseteil gelagert ist. Der Rotor des ersten Motors ist durch eine Motorantriebswelle mit einem Planetenuntersetzungsgetriebe einer ersten Stufe gekoppelt, die mit einem ersten Harmonic-Drive-Wellengenerator verbunden ist, der dazu dient, eine kontinuierliche Welle einer radialen Ablenkung in Umfangsrichtung in einem ersten Flex-Spline zu erzeugen. Der erste Flex-Spline hat eine Außenverzahnung, die mit einer an dem ersten Gehäuseteil ausgebildeten Innenverzahnung sowie einer an einer starren Kupplung ausgebildeten ersten Innenverzahnung zusammenwirkt. Die starre Kupplung verbindet das Planetenuntersetzungsgetriebe der ersten Stufe mit einem Planetenuntersetzungsgetriebe einer zweiten Stufe. Der Rotor des zweiten Motors ist durch eine Motorantriebswelle mit dem Planetenuntersetzungsgetriebe der zweiten Stufe gekoppelt, die mit einem zweiten Harmonic-Drive-Wellengenerator verbunden ist, der dazu dient, eine kontinuierliche Welle einer radialen Ablenkung in Umfangsrichtung in einem zweiten Flex-Spline zu erzeugen. Der zweite Flex-Spline hat eine Außenverzahnung, die mit einer an der rohrförmigen Abtriebswelle ausgebildeten Innenverzahnung sowie einer an der starren Kupplung ausgebildeten zweiten Innenverzahnung zusammenwirkt. Der zweite Harmonic-Drive-Wellengenerator und der zweite Flex-Spline sind bereichsweise innerhalb der rohrförmigen Abtriebswelle angeordnet.

Die US 2010/038478 A1 beschreibt einen weiteren Aktuator mit zwei Motoren, die ein Spannungswellengetriebe antreiben. Der Aktuator kann in einem Fahrwerk, in Landeklappen oder in Querrudern eines Luftfahrzeugs Anwendung finden.

Ausgehend vom vorstehend beschriebenen Stand der Technik ist es die Aufgabe der vorliegenden Erfindung, einen Aktuator für Luftfahrtanwendungen zu schaffen, welcher sich durch eine noch geringere Schadenanfälligkeit und damit eine höhere Zuverlässigkeit bzw. Fehlertoleranz auszeichnet.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder.

Gemäß der Erfindung umfasst ein Aktuator für Luftfahrtanwendungen eine elektromechanische Antriebseinrichtung, welche über ein nachgeschaltetes Getriebe mit einem Abtrieb verbunden ist. Dabei ist die Antriebseinrichtung in unabhängig voneinander betreibbare Teilantriebe aufgeteilt. Der erfindungsgemäße Aktuator kommt dabei insbesondere bei einer Rotorblattverstellung eines Hubschraubers zur Anwendung und kann hierbei entweder zur Bewegung einer Taumelscheibe vorgesehen sein, über die eine Blattverstellung der Rotorblätter des Hubschraubers umgesetzt wird, oder aber für eine Einzelblattverstellung vorgesehen sein, wobei der Aktuator dann zwischen dem Einzelblatt und dem Rotorkopf des Haupt- oder Heckrotors angeordnet ist. Der erfindungsgemäße Aktuator kann aber auch in anderen Bereichen und auch bei anderen Luftfahrzeugen, wie Flugzeugen, zur Anwendung kommen und hier einer Klappensteuerung oder der Bedienung eines Ruders, wie einem Querruder oder einem Höhenruder, dienen.

Im Rahmen der Erfindung werden die unabhängig voneinander betreibbaren Teilantriebe der elektromechanischen Antriebseinrichtung dadurch realisiert, dass jeder Teilantrieb unabhängig mit Energie versorgt und auch geregelt werden kann. So ist jedem Teilantrieb, je nach Anzahl an Phasen, zumindest ein Generator mit nachgeschaltetem Gleichrichter zugeordnet, welcher mit dem Teilantrieb über je eine Versorgungsleitung verbunden ist. Insbesondere bei Teilantrieben mit einer hohen Anzahl an Phasen können zur Versorgung der Wicklungen auch mehrere Generatoren, Gleichrichter und Versorgungsleitungen zugeordnet sein. Eine Regelung des einzelnen Teilantriebs wird dabei, je nach Phasenanzahl, über ein oder mehrere Leistungssteuereinheiten (engl. Power Drive Electronics, PDE) geregelt, welche wiederum jeweils über je eine zugehörige Aktuatorkontrolleinheit (engl. Actuator Control Unit, ACU) gesteuert werden. Insgesamt erfolgt eine Regelung über mehrere Flugkontrollcomputer (engl. Flight Control Computer, FCC), die zudem mit Informationen mehrerer Sensoren versorgt werden.

Die Erfindung umfasst nun die technische Lehre, dass es sich bei dem Getriebe um zumindest zwei über zumindest ein erstes Kopplungselement miteinander gekoppelte Spannungswellengetriebe handelt, wobei ein erstes Spannungswellengetriebe innerhalb eines drehfesten ersten Gehäuses angeordnet ist, und wobei ein zweites Spannungswellengetriebe innerhalb eines drehbaren zweiten Gehäuses angeordnet ist, wobei das zweite Gehäuse mit dem Abtrieb verbunden ist. Mit anderen Worten ist also das Getriebe zwischen zumindest zwei Teilantrieben platziert und trennt diese somit räumlich voneinander, indem der eine Teilantrieb auf der einen Seite des Getriebes und der andere Teilantrieb auf der anderen Seite des Getriebes vorgesehen ist.

Eine derartige Ausgestaltung eines Aktuators hat dabei den Vorteil, dass Beschädigungen des einen Teilantriebes, beispielsweise durch Feuer, schwerer auch zu einer Beschädigung des anderen Teilantriebes führen können, da ja das Getriebe zwischen beiden Teilantrieben angeordnet ist. Insofern wird hierdurch die Schadensanfälligkeit des Aktuators vermindert und damit insgesamt die Zuverlässigkeit erhöht. Zugleich wird der Aktuator durch die nach wie vor vorhandenen, unabhängig voneinander betreibbaren Teilantriebe als redundantes System gestaltet, bei welchem auch bei einzelnen Fehlerereignissen noch die Steuerfunktion gewährleistet bleibt. Mit anderen Worten, sind die beiden redundanten Teilantriebe derart ausgeführt, dass die Steuerfunktion noch mit einem einzelnen Teilantrieb aufrechterhalten bleibt.

Der Ausfall eines Teilantriebs hat allenfalls zur Folge, dass die verbleibende Stellgeschwindigkeit halb so groß wie zuvor ist. Ist diese mit einem entsprechenden Sicherheitsfaktor, insbesondere von größer oder gleich zwei ausgelegt, so bleibt weiterhin die vollständige Steuerfunktion erhalten.

Bei dem Aktuator kommt ein Getriebe mit mindestens zwei Spannungswellengetrieben zum Einsatz. Ein Spannungswellengetriebe, das auch als Harmonic Drive, Wellgetriebe, Gleitkeilgetriebe bekannt ist, ist ein Getriebe mit einem elastischen Übertragungselement, das sich durch hohe Übersetzung und Steifigkeit auszeichnet.

Ein Spannungswellengetriebe besteht grundsätzlich aus drei Elementen, nämlich
einer elliptischen Stahlscheibe, dem sogenannten Wave Generator,
einer verformbaren zylindrischen Stahlbüchse mit Außenverzahnung, dem sogenannten Flexspline, sowie
einem starren zylindrischen Außenring mit Innenverzahnung, dem Circular Spline. An gegenüberliegenden Bereichen greifen seine Zähne und die des Flexspline ineinander.

Die Außenverzahnung der Stahlbüchse hat weniger Zähne als die Innenverzahnung des Außenrings. In der Regel beträgt diese Differenz zwei Zähne. Somit vollführen Flexspline und Circular Spline bei jeder Umdrehung eine Relativbewegung um zwei Zähne.

Die angetriebene elliptische Scheibe verformt die dünnwandige Stahlbüchse über den Außenring eines Kugellagers. Dadurch greift die Außenverzahnung der Stahlbüchse im Bereich der großen Ellipsenachse in die Innenverzahnung des Außenrings. Hält man den Außenring fest, bleibt bei einer Umdrehung der Antriebsscheibe die Stahlbüchse (der Abtrieb) entsprechend der geringeren Zahl der Zähne gegenüber dem Außenring zurück. Durch die hohen Zähnezahlen der feinen Verzahnungen erhält man sehr große Untersetzungen. Der Vorteil eines Spannungswellengetriebes gegenüber einem aus dem Stand der Technik bekannten Zykloidgetriebes ist der geringere Herstellungsaufwand.

Die Erfindung zeichnet sich zudem aufgrund der relativ geringen Anzahl von Teilen durch ein niedriges Gewicht aus. Das Getriebe bietet weiterhin ein hohes Untersetzungsverhältnis und ist spielfrei. Es weist zudem eine hohe Positionier- und Wiederholgenauigkeit auf. Außerdem weist der Aktuator eine höhere mittlere Betriebsdauer zwischen Ausfällen für reparierbare Einheiten auf (engl. Mean Time Between Failures, MTBF). Der Aktuator baut kompakt. Schließlich weist er wenige mit Verschleiß beaufschlagte Bauteile auf, sodass er zusätzlich einen geringen Verschleiß aufweist.

Entsprechend einer Ausgestaltungsmöglichkeit sind beidseitig des Getriebes jeweils mindestens zwei Teilantriebe, bevorzugt jeweils genau zwei Teilantriebe vorgesehen. Darüber hinaus ist es bevorzugt, wenn jeweils genau drei Teilantriebe vorgesehen sind.

Der eine oder auch die mehreren auf einer Seite des Getriebes vorgesehenen Teilantriebe sind im Sinne der Erfindung dann insbesondere in einem Gehäuse gekapselt, um eine Beeinträchtigung des oder der Teilantriebe von außen möglichst zu verhindern.

Gemäß einer Ausführungsform der Erfindung verfügt das Getriebe über zwei Antriebswellen, wobei die eine Antriebswelle dem mindestens einen auf der einen Seite des Getriebes liegenden Teilantrieb und die andere Antriebswelle dem mindestens einen auf der anderen Seite des Getriebes liegenden Teilantrieb zugeordnet ist. Das Getriebe summiert dann die Antriebsleistungen der Teilantriebe zum Abtrieb auf. Auch hierdurch kann beim Blockieren eines oder mehrerer Teilantriebe auf einer Seite nach wie vor die Steuerfunktion des Aktuators realisiert werden.

Sind insgesamt zwei Teilantriebe vorgesehen, so ist einem Teilantrieb stets eine separate Antriebswelle zugeordnet, sodass das Getriebe mindestens zwei Antriebswellen aufweist. Es ist demnach nicht möglich, dass bei lediglich zwei vorhandenen Teilantriebe, diese einer gemeinsamen Antriebswelle zugeordnet sind.

Sind beispielsweise vier Teilantriebe vorgesehen, so kann einem jeden dieser Teilantriebe eine separate Welle zugeordnet werden, sodass insgesamt vier Antriebswellen vorgesehen sind. Es ist aber auch möglich, je zwei Teilantrieben eine Antriebswelle vorzusehen, sodass insgesamt zwei Antriebswellen bei vier Teilantrieben ausreichend sind.

Die Teilantriebe können zu Antriebseinheiten zusammengefasst sein, derart, dass beidseits des Getriebes eine Antriebseinheit vorgesehen ist. Im Falle von zwei Teilantrieben umfasst eine Antriebseinheit einen Teilantrieb. Im Falle von vier Teilantrieben umfasst eine Antriebseinheit zwei Teilantriebe.

Eine Bremswirkung kann ohne Verriegelungselemente erzielt werden, indem sich eine Antriebseinheit selbst bremst. Dies soll nachfolgend näher erläutert werden:
Bei einem fehlerhaften Teilantrieb kann eine Bremswirkung erzielt werden, indem die Motorphasen des fehlerhaften Teilantriebs kurzgeschlossen werden. Das Kurzschlie-ßen bewirkt, dass aufgrund der durch die Drehung der Motorwelle induzierten Spannung ein Phasenstrom erzeugt wird, der zu einem auf die Motorwelle des Teilantriebs wirkenden elektromagnetischen Bremsmoments führt. So ist es bevorzugt, mehrere Mittel vorzusehen, die dazu eingerichtet sind, einen Kurzschluss der Motorphasen in einem jeden Teilantrieb zu erzeugen. Eine solche beschriebene Bremswirkung durch Kurzschließen der Motorphasen ist sowohl bei einem Aktuator mit zwei also auch mit vier Teilantrieben möglich.

Bei einem Aktuator mit vier Teilantrieben ist eine Bremswirkung ohne Verriegelungselemente und ohne Kurzschließen der Motorphasen möglich. Hierfür ist es bevorzugt, wenn bei einem fehlerhaften Teilantrieb der funktionsfähige Teilantrieb derselben Antriebseinheit eingerichtet ist, d.h. insbesondere derart angesteuert werden kann, dass die Abtriebsbewegung der fehlerhaften Antriebseinheit "aktiv" gebremst wird. Mit anderen Worten: Die fehlerhafte Antriebseinheit bremst sich selbst, durch den noch verbleibenden Teilantrieb. Bei dieser Ausführungsform ist ein entsprechender Regelalgorithmus implementiert. Zusätzliche Hardware ist nicht erforderlich.

Bei einem Aktuator mit vier Teilantrieben kann das "Kurzschlussverfahren" mit der "aktiven" Bremsung der Antriebseinheit kombiniert werden. D.h., der fehlerhafte Teilantrieb wird kurzgeschlossen, während der funktionierende Teilantrieb derselben Antriebseinheit die Antriebseinheit bremst.

In einer Weiterbildung der Erfindung kann vorgesehen sein, dass in dem Aktuator: das erste Spannungswellengetriebe einen ersten Wave Generator aufweist, der mittels eines zumindest ersten Teilantriebs antreibbar ist, wobei der erste Wave Generator innerhalb eines mit dem ersten Getriebegehäuse drehfest verbundenen ersten Flexspline angeordnet ist, wobei der erste Flexspline eine erste Außenverzahnung aufweist,
das zweite Spannungswellengetriebe einen zweiten Wave Generator aufweist, der mittels eines zumindest zweiten Teilantriebs antreibbar ist, wobei der zweite Wave Generator innerhalb eines mit dem zweiten Gehäuse drehfest verbundenen zweiten Flexspline angeordnet ist, wobei der zweite Flexspline eine zweite Außenverzahnung aufweist,
das Kopplungselement als ein einteiliger Circular Spline oder ein mehrteiliger Circular Spline ausgebildet ist und wobei der Circular Spline eine bzw. mehrere Innenverzahnung(en) aufweist, die zu der ersten und zweiten Außenverzahnung korrespondiert.

Der Aktuator kann durch Verriegelungselemente weitergebildet werden. So ist es bevorzugt, wenn zumindest ein Verriegelungselement je Seite des Getriebes vorgesehen ist, das antriebsseitig angeordnet und eingerichtet ist, den zumindest einen Teilantrieb festzuhalten. Alternativ oder zusätzlich dazu ist es bevorzugt, wenn zumindest ein Verriegelungselement je Seite des Getriebes vorgesehen ist, das abtriebsseitig angeordnet und eingerichtet ist, jeweils eine Relativbewegung zwischen einem der zwei Gehäuse und dem Kopplungselement zu verhindern.

Die Verriegelungselemente sind bevorzugt als Bremsen ausgeführt, die in einem stromlosen Zustand eine Bremswirkung bewirken, sogenannte Power Off Brakes.

Wird die Bremse nicht mehr mit Strom versorgt, so wird die entsprechende Welle angehalten oder festgehalten. Ein Beispiel einer stromlos verriegelten Bremse ist eine elektromagnetische Bremse.

Die Verriegelungselemente können, wenn sie antriebsseitig angeordnet sind, im Fehlerfall die entsprechende Antriebswelle festhalten und diese damit an einer Drehung hindern. Wenn sie abtriebsseitig angeordnet ist, kann sie im Fehlerfall eine Relativbewegung zwischen dem feststehenden ersten Gehäuse und dem Kopplungselement verhindern. Beziehungsweise es kann eine Relativbewegung zwischen dem beweglichen zweiten Gehäuse und dem Kopplungselement verhindern.

Gemäß der Erfindung weist der Aktuator zwei weitere Spannungswellengetriebe auf, wodurch die Redundanz weiter erhöht werden kann.

Somit umfasst der erfindungsgemäße Aktuator:
ein drittes Spannungswellengetriebe und ein viertes Spannungswellengetriebe,
die axial zwischen dem ersten und zweiten Spannungswellengetriebe angeordnet sind,
wobei anstelle des ersten Kopplungselements nunmehr ein zweites Kopplungselement vorgesehen ist, das das erste und das dritte Spannungswellengetriebe miteinander koppelt,
wobei ein drittes Kopplungselement vorgesehen ist, dass das zweite und das vierte Spannungswellengetriebe miteinander koppelt,
wobei das zweite und das dritte Kopplungselement drehfest miteinander verbunden sind.

Bevorzugt ist es, wenn
das erste und dritte Spannungswellengetriebe innerhalb des drehfesten ersten Gehäuses angeordnet ist,
das zweite und vierte Spannungswellengetriebe innerhalb des drehbaren zweiten Gehäuses angeordnet ist,
wobei das erste und zweite Gehäuse in seiner jeweiligen Umfangsrichtung eine Mehrzahl an Ausnehmungen, insbesondere sich in Umfangsrichtung erstreckende Schlitze, aufweisen, durch welche Ausnehmungen Verbindungselemente zum drehfesten Verbinden des zweiten und dritten Kopplungselements geführt sind, sodass die Verbindungselemente zumindest teilweise außerhalb der Gehäuse angeordnet sind. Darunter ist auch zu verstehen, dass das zweite Gehäuse so ausgeführt sein kann, dass es die Verbindungselemente umschließt und den Innenraum mit einem an dem ersten Gehäuse anliegenden Dichtungselement gegenüber der Umgebung abdichtet.

Es ist zweckmäßig mindestens zwei Ausnehmungen vorzusehen. Als vorteilhaft haben sich drei, vier, fünf, sechs, sieben oder acht Ausnehmungen erwiesen. Es können auch mehr Ausnehmungen sein. Mithin ist es bevorzugt, ein Vielfaches von Zwei (n mal 2) oder ein Vielfaches von Zwei plus Eins ((n mal 2) plus 1) an Ausnehmungen vorzusehen. Durch jede dieser Ausnehmungen ist ein Verbindungselement geführt. Es ist zudem zweckmäßig, die winkelmäßige Erstreckung der Ausnehmungen jeweils gleich groß zu gestalten und auch die dazwischenliegenden Abschnitte der Gehäuse gleich groß zu gestalten.

Beispielsweise können vier Ausnehmungen mit einer Erstreckung von jeweils 45° vorgesehen sein. Zwischen den jeweiligen Ausnehmungen erstreckt sich bspw. ein jeweiliger Gehäuseabschnitt von ebenfalls 45°. Es können aber auch beispielsweise sechs Ausnehmungen mit jeweils 45° vorgesehen sein. Zwischen den jeweiligen sechs Ausnehmungen erstreckt sich bspw. ein jeweiliger Gehäuseabschnitt von 22,5°. Es können jedoch auch beispielsweise vier Ausnehmungen mit jeweils 60° vorgesehen sein. Zwischen den jeweiligen Ausnehmungen erstreckt sich bspw. ein jeweiliger Gehäuseabschnitt von 30°.

Die Größe der Ausnehmungen gibt einen Stellbereich für die Verbindungsmittel vor, sodass die Verbindungsmittel innerhalb eines Winkelbereichs bewegt werden können. Die Enden der Ausnehmungen bzw. der Schlitze in Umfangsrichtung bilden demnach einen Endanschlag oder Wegbegrenzer in Umfangsrichtung.

Bevorzugt ist es, wenn
das dritte Spannungswellengetriebe einen dritten Wave Generator aufweist, der mittels eines zumindest ersten Teilantriebs antreibbar ist, wobei der dritte Wave Generator innerhalb eines mit dem ersten Gehäuse drehfest verbundenen dritten Flex-spline angeordnet ist, wobei der dritte Flexspline eine dritte Außenverzahnung aufweist,
das vierte Spannungswellengetriebe einen vierten Wave Generator aufweist, der mittels eines zumindest zweiten Teilantriebs antreibbar ist, wobei der vierte Wave Generator innerhalb eines mit dem zweiten Gehäuse drehfest verbundenen vierten Flexspline angeordnet ist, wobei der vierte Flexspline eine vierte Außenverzahnung aufweist,
das zweite Kopplungselement als ein zweiter Circular Spline ausgebildet ist, wobei der zweite Circular Spline eine Innenverzahnung aufweist, die zu der ersten und dritten Außenverzahnung korrespondiert,
das dritte Kopplungselement als ein dritter Circular Spline ausgebildet ist, wobei der dritte Circular Spline eine Innenverzahnung aufweist, die zu der zweiten und vierten Außenverzahnung korrespondiert.

Auch an dieser Stelle wird darauf hingewiesen, dass der zweite und dritte Circular Spline ein- oder mehrteilig ausgeführt sein kann und dementsprechend jeweils eine bzw. zwei Innenverzahnungen aufweisen kann.

Die vier Wave Generatoren können bevorzugt zwei Antriebswellen oder vier Antriebswellen zugeordnet, d.h. mit ihnen verbunden sein.

Sind zwei gemeinsame Antriebswellen vorgesehen, so kann bevorzugt je ein Verriegelungselement einer gemeinsamen Antriebswelle zugeordnet sein. Sind vier separate Antriebswellen vorgesehen, so kann einer jeden Antriebswelle ein separates Verriegelungselement zugeordnet werden.

Bevorzugt ist es, wenn
die zwei gemeinsamen Antriebswellen jeweils als Hohlwelle ausgebildet sind, durch welche jeweils ein Stützelement geführt ist, das an einem seiner axialen Enden mit dem jeweiligen Gehäuse drehfest verbunden ist,
wobei ein erstes Stützelement innerhalb des ersten Gehäuses angeordnet ist und der dritte Wave Generator drehbar an diesem Stützelement gelagert sowie der dritte Flexspline mit diesem Stützelement drehfest verbunden ist,
wobei ein zweites Stützelement innerhalb des zweiten Gehäuses angeordnet ist und der vierte Wave Generator drehbar an diesem Stützelement gelagert sowie der vierte Flexspline mit diesem Stützelement drehfest verbunden ist.

Das Stützelement kann als ein Stützrohr ausgeführt sein. Während das jeweilige Stützelement an dem jeweils einen axialen Ende mit dem jeweiligen Gehäuse drehfest verbunden ist, kann es an seinem anderen axialen Ende insbesondere mit einem im Kopplungselement drehbar gelagerten sowie gegenüber dem Kopplungselement abdichtenden Element verbunden sein, wobei besagtes Element bevorzugt als ein mit dem Stützelement verbundener Flansch ausgeführt sein kann. Insbesondere ist vorgesehen, dass es keine unmittelbare Verbindung zwischen dem jeweiligen Flansch und dem ersten bzw. dem zweiten Gehäuse gibt - lediglich mittelbar über das jeweilige Stützelement.

Diese Ausführungsform ermöglicht es, dass die Kopplung des zweiten Circular Spline mit dem dritten Circular Spline innerhalb der Gehäuse angeordnet sein kann. Das heißt, der Circular Spline der ersten Antriebseinheit ist mit dem Circular Spline der zweiten Antriebseinheit innerhalb der Gehäuse gekoppelt.

Anders ausgedrückt, müssen die Circular Splines nicht mehr durch außerhalb des Gehäuses verlaufende Verbindungsmittel verbunden werden.

Dies bietet den Vorteil, dass auf das Verbindungsmittel verzichtet werden kann, da ein gemeinsamer Circular Spline vorgesehen ist, dessen Innenverzahnung mit den Außenverzahnungen der vier Flexsplines korrespondiert. Das zweite und dritte Kopplungselement, also der zweite und dritte Circular Spline können demnach als eine integrale Baueinheit ausgeführt sein. Es ist jedoch auch denkbar, den zweiten und dritten Circular Spline drehfest miteinander zu verbinden.

Zudem kann auch auf die vorstehend genannten Aussparungen verzichtet werden. Hierdurch fällt die Winkelbegrenzung weg, sodass zusätzlich ein größerer Stellbereich bewirkt werden kann.

Die Erfindung wird zudem durch einen Hubschrauber mit einem vorstehend beschriebenen Aktuator gelöst.

Bevorzugte Ausführungsformen der Erfindung, die nachfolgend erläutert werden, sind in den Zeichnungen dargestellt. Es zeigt:
- Fig. 1: eine schematische Ansicht eines Aktuators nach dem Stand der Technik;
- Fig. 2: eine schematische Ansicht eines Aktuators, der nicht in den Schutzbereich der Ansprüche fällt;
- Fig. 3: eine schematische Ansicht eines Aktuators, der nicht in den Schutzbereich der Ansprüche fällt;
- Fig. 4: eine schematische Darstellung eines Aktuators entsprechend der Erfindung;
- Fig. 5: eine schematische Darstellung zweier Lastpfade des Aktuators aus Fig. 4;
- Fig. 6: eine schematische Ansicht eines Aktuators gemäß einer vierten Ausgestaltungsmöglichkeit der Erfindung;
- Fig. 7: eine schematische Ansicht eines Aktuators gemäß einer fünften Ausgestaltungsmöglichkeit der Erfindung; und
- Fig. 8: einen Hubschrauber mit einem Aktuator.

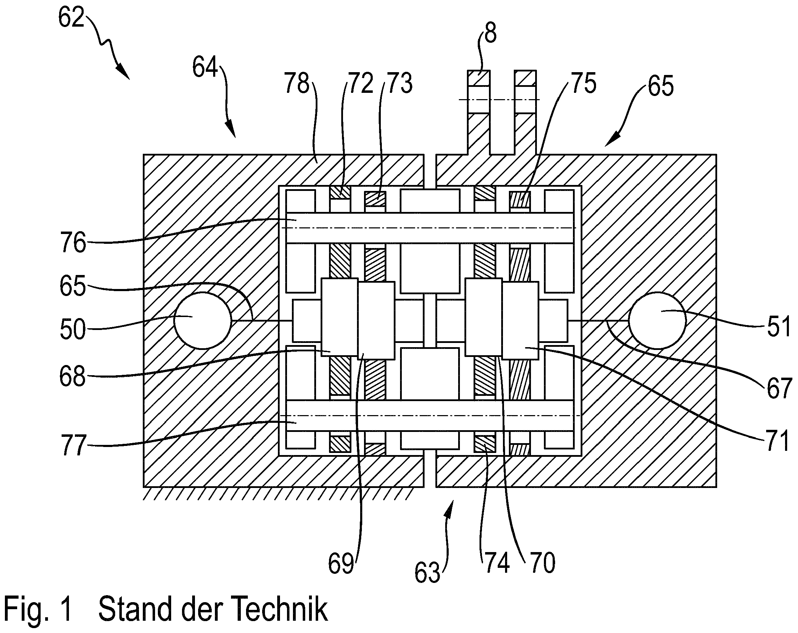

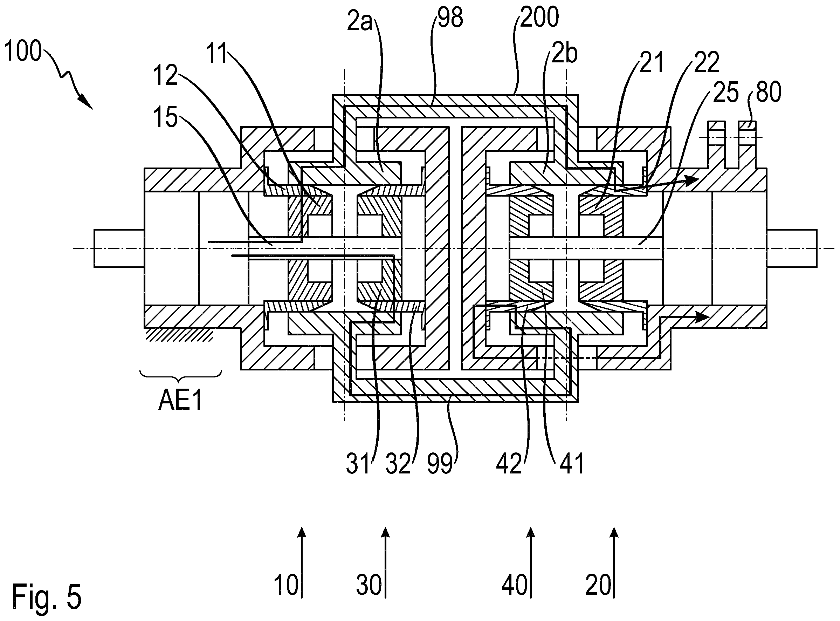

Aus Fig. 1 geht eine schematische Ansicht eines Aktuators gemäß dem Stand der Technik (DE 10 2015 203 411 A1, Fig. 5) hervor. Dabei ist dieser Aktuator insbesondere im Bereich einer Rotorblattverstellung eines Hubschraubers vorgesehen und ist Teil einer Taumelscheibensteuerung oder einer Einzelblattsteuerung von Haupt- oder Heckrotorblättern des Hubschraubers.

Der Aktuator 62 umfasst zwei Teilantriebe 50 und 51 und ist über ein nachgeschaltetes Getriebe 63 mit einem Abtrieb 8 des Aktuators 62 verbunden ist. Über den Abtrieb 8 kann die durch die Antriebseinrichtung erzeugte und über das Getriebe 63 übersetzte Drehbewegung auf hieran angebundene Komponenten übertragen werden.

Das Getriebe 63 ist als Zykloidgetriebe gestaltet und setzt sich aus zwei Getriebestufen 64 und 65 zusammen, über welche Antriebsbewegungen der Teilantriebe 50 und 51 zum Abtrieb 8 hin aufsummiert werden. Hierzu verfügt das Getriebe 63 über zwei Antriebswellen 66 und 67, von welchen die Antriebswelle 66 mit dem Teilantrieb 50 und die Antriebswelle 67 mit dem Teilantrieb 51 verbunden ist. Jede der Antriebswellen 66 und 67 trägt jeweils insgesamt zwei Exzenter 68 und 69 bzw. 70 und 71, die mit je einer Kurvenscheibe 72 bzw. 73 bzw. 74 bzw. 75 in Verbindung stehen und diese antreiben. Alle Kurvenscheiben 72 bis 75 führen dabei gemeinsame Bolzen 76 und 77, wobei allerdings die Kurvenscheiben 72 und 73 radial umliegend mit einem feststehenden Bolzenring in Kontakt stehen, während ein Bolzenring im Falle der Kurvenscheiben 74 und 75 drehfest mit dem Abtrieb 8 verbunden ist. Durch diesen Aufbau des Getriebes 63 wird dabei erreicht, dass auch bei Blockieren einer der beiden Getriebestufen 64 oder 65 noch eine evtl. eingeschränkte Steuerfunktion über die jeweils andere Getriebestufe 65 oder 64 realisiert werden kann.

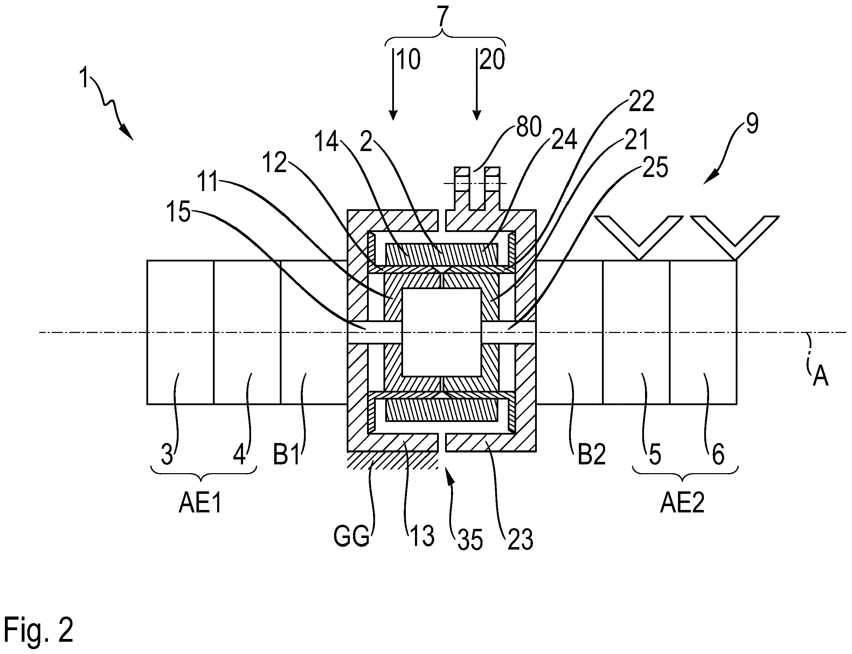

Aus Fig. 2 geht eine schematische Ansicht eines Aktuators 1 hervor, der nicht in den Schutzbereich der Ansprüche fällt. Dabei ist dieser Aktuator 1 insbesondere im Bereich einer Rotorblattverstellung eines Hubschraubers vorgesehen und ist hier Teil einer Taumelscheibensteuerung oder einer Einzelblattsteuerung von Haupt- oder Heckrotorblättern des Hubschraubers. Alternativ dazu kann der Aktuator 1 aber auch in anderen Bereichen des Hubschraubers oder auch eines anderen Luftfahrzeuges, wie einem Flugzeug, zur Anwendung kommen, um Steuerfunktionen umzusetzen, wie die Steuerung von Klappen oder Rudern, beispielsweise in Form eines Höhen- oder Querruders.

Wie in Fig. 2 zu erkennen ist, umfasst der Aktuator 1 eine elektromechanische Antriebseinrichtung, die in mehrere Teilantriebe 3, 4, 5 und 6 aufgeteilt ist und über ein zwischen den Teilantrieben 3,4 einerseits und den Teilantrieben 5, 6 andererseits angeordnetes Getriebe 7 mit einem Abtrieb 80 des Aktuators 1 verbunden ist. Gemäß dieses Beispiels sind aus Gründen der Redundanz je Seite zwei Teilantriebe, also insgesamt vier Teilantriebe vorgesehen. Die Teilantriebe 3, 4 sind zu einer ersten Antriebseinheit AE1 zusammengefasst. Die Teilantriebe 5, 6 sind zu einer zweiten Antriebseinheit AE2 zusammengefasst. Die Anordnung funktioniert jedoch auch mit insgesamt nur zwei Teilantrieben, also mit nur einem Teilantrieb je Seite. Der Abtrieb 80 ist vorliegend dabei als Steuerhorn gestaltet, über welchen die durch die Antriebseinheiten AE1, AE2 erzeugte und über das Getriebe 7 übersetzte Drehbewegung weiter auf hieran angebundene Komponenten übertragen wird. Gut zu erkennen ist, dass der zumindest eine Teilantrieb 3, 4 räumlich von dem zumindest einen anderen Teilantrieb 5, 6 getrennt ist, indem das Getriebe 7 zwischen diesen Teilantrieben vorgesehen ist, sodass also zumindest zwei Teilantriebe durch das Getriebe 7 voneinander getrennt sind.

Die vier Teilantriebe 3 bis 6 der Antriebseinrichtung sind vorliegend unabhängig voneinander betreibbar, um den Aktuator 1 als redundantes System zu gestalten. So wird jeder der Teilantriebe 3 bis 6 über je eine, ihm zugeordnete Versorgungsleitung versorgt (nicht dargestellt). Die Teilantriebe 3 und 4 können insbesondere kabelgebunden versorgt werden. Die Teilantriebe 5 und 6 können über Schleifkontakte 9 versorgt werden. Es ist jedoch denkbar und je nach Anordnung gar von Vorteil, wenn die Teilantriebe 5, 6 ebenfalls kabelgebunden versorgt werden.

Das Getriebe 7 verfügt über zwei Antriebswellen, wobei eine erste Antriebswelle 15 dem mindestens einen auf der einen Seite des Getriebes 7 liegenden Teilantrieb 3, 4 und die andere zweite Antriebswelle 25 dem mindestens einen auf der anderen Seite des Getriebes 7 liegenden Teilantrieb 5, 6 zugeordnet ist. Das Getriebe 7 kann so die Antriebsleistungen der Teilantriebe 3 und/oder 4 und 5 und/oder 6 zum Abtrieb 80 aufsummieren.

An dieser Stelle wird darauf verzichtet, näher auf die Aspekte der Steuer- und Regelung einzugehen. Diese ist bekannt, so bspw. aus der Figurenbeschreibung zu Fig. 1 aus der DE 10 2015 203 411 A1.

Das Getriebe 7 weist zwei Spannungswellengetriebe auf, die auch als Harmonic Drive bezeichnet werden.

Ein erstes Spannungswellengetriebe 10 umfasst in bekannter Weise drei Elemente, nämlich einen ersten Wave Generator 11, einen ersten Flexspline 12 und einen ersten Circular Spine 14. Bei dem ersten Wave Generator 11 handelt es sich um eine elliptische Stahlscheibe, welche den Antrieb des Getriebes 10 bildet. Bei dem ersten Flexspline 12 handelt es sich um eine verformbare zylindrische Stahlbuchse mit einer ersten Außenverzahnung. Bei dem Circular Spline 14 handelt es sich um einen starren zylindrischen Außenring mit einer zur ersten Außenverzahnung korrespondierenden Innenverzahnung. Der erste Wave Generator 11 ist mit einer ersten Antriebswelle 15 verbunden, wobei die erste Antriebswelle 15 mittels der Teilantriebe 3 und 4 angetrieben werden kann. Der erste Flexspline 12 ist innerhalb eines ersten Getriebegehäuses 13 mit diesem Gehäuse 13 drehfest verbunden. Das Gehäuse 13 ist drehfest angeordnet, bspw. an einem Gehäuse GG oder einem anderen drehfesten Bauteil.

Ein zweites Spannungswellengetriebe 20 umfasst einen zweiten Wave Generator 21, einen zweiten Flexspline 22 und einen zweiten Circular Spline 24. Bei dem zweiten Wave Generator 21 handelt es sich um eine elliptische Stahlscheibe, welche den Antrieb des Getriebes 20 bildet. Bei dem zweiten Flexspline 22 handelt es sich um eine verformbare zylindrische Stahlbuchse mit einer zweiten Außenverzahnung. Bei dem Circular Spline 24 handelt es sich um einen starren zylindrischen Außenring mit einer zur zweiten Außenverzahnung korrespondierenden Innenverzahnung. Der zweite Wave Generator 21 ist mit einer zweiten Antriebswelle 25 verbunden, wobei die zweite Antriebswelle 25 mittels der Teilantriebe 5 und 6 angetrieben werden kann.

Der zweite Flexspline 22 ist innerhalb eines zweiten Getriebegehäuses 23 mit diesem Gehäuse 23 verbunden. Das Gehäuse 23 ist im Gegensatz zum ersten Gehäuse 13 um eine Antriebsachse A drehbar angeordnet. Das zweite Gehäuse 23 ist mit dem Abtrieb 80 verbunden, bzw. bildet diesen Abtrieb 80.

Die beiden Circular Splines 14, 24 sind gemäß dieser Anordnung als ein einteiliges Bauteil mit einer entsprechenden Innenverzahnung ausgeführt. Dieses einteilige Bauteil bildet ein Kopplungsmittel 2, das die beiden Spannungswellengetriebe 10, 20 miteinander koppelt. Das Kopplungsmittel 2 kann auch als ein erster gemeinsamer Circular Spline bezeichnet werden. Dieses Kopplungsmittel 2 bildet den Abtrieb der ersten Antriebseinheit AE1 und die drehfeste Abstützung der zweiten Antriebseinheit AE2.

Das Kopplungselement ist vorliegend als ein einteiliger Circular Spline 2 ausgebildet. Der Circular Spline 2 kann jedoch auch mehrteilig, bspw. mittels zweier miteinander verbundener Außenringe 14, 24 ausgeführt sein.

Der Wave Generator 11 treibt den Circular Spline 2 an, während sich die zweite Antriebseinheit AE2 am Circular Spline 2 abstützt. Der Abtrieb erfolgt dann über den Flexspline 22.

In der Fig. 2 ist zwischen dem ersten Gehäuse 13 und dem zweiten Gehäuse 23 ein Spalt 35 zu erkennen. Dieser Spalt 35 soll lediglich hervorheben, dass die zwei Gehäuse nicht drehfest miteinander verbunden sind, sondern, dass zwischen beiden Gehäusen eine Relativbewegung möglich ist, die zur Ausführung der Stellfunktion notwendig ist. In dem Spalt 35 ist daher bevorzugt eine Dichtmasse, vorgesehen, sodass die zwei Gehäuse nach außen hin abgeschlossen sind. Als Dichtmasse kann bspw. ein Wellendichring, insbesondere in der Form eines Radial-Wellendichtringes verwendet werden, um die Gehäuse 13, 23 gegen die Umgebung abzudichten. Über das Getriebe 7 wird dabei eine gemeinsam durch die Teilantriebe 3 bis 6 dargestellte Antriebsbewegung ins Langsame auf den Abtrieb 80 übersetzt.

Die Teilantriebe 3 bis 6 sind jeweils als Elektromotoren mit je drei Phasen ausgeführt. Zudem sind die auf der jeweiligen Seite des Getriebes 7 liegenden Teilantriebe 3 und 4 bzw. 5 und 6 in Bezug auf die Antriebswelle 15 bzw. 25 axial hintereinanderliegend angeordnet und in je einem gemeinsamen Gehäuse aufgenommen. Die Teilantriebe 3, 4 bilden, wie bereits erwähnt, die erste Antriebseinheit AE1. Die Teilantriebe 5, 6 bilden die zweite Antriebseinheit AE2.

Ferner ist zwischen der ersten Antriebseinheit AE1 und dem Spannungswellengetriebe 10 ein erstes Verriegelungselement B1 und zwischen der zweiten Antriebseinheit AE2 und dem Spannungswellengetriebe 20 ein zweites Verriegelungselement B2 angeordnet. Die Verriegelungselemente B1, B2 sind jeweils als eine elektromagnetische Bremse ausgebildet, welche bei Stromunterbrechung die entsprechende Welle festhält, sogenannte Power Off Brake. Die Verriegelungselemente B1, B2 sind gemäß dieser Ausführungsform antriebsseitig angeordnet und können bei einer Stromzufuhrunterbrechung die erste bzw. die zweite Antriebswelle 15, 25 gegenüber dem Gehäuse 13 bzw. 23 festhalten und damit eine Drehung der Antriebswellen 15 bzw. 25 verhindern.

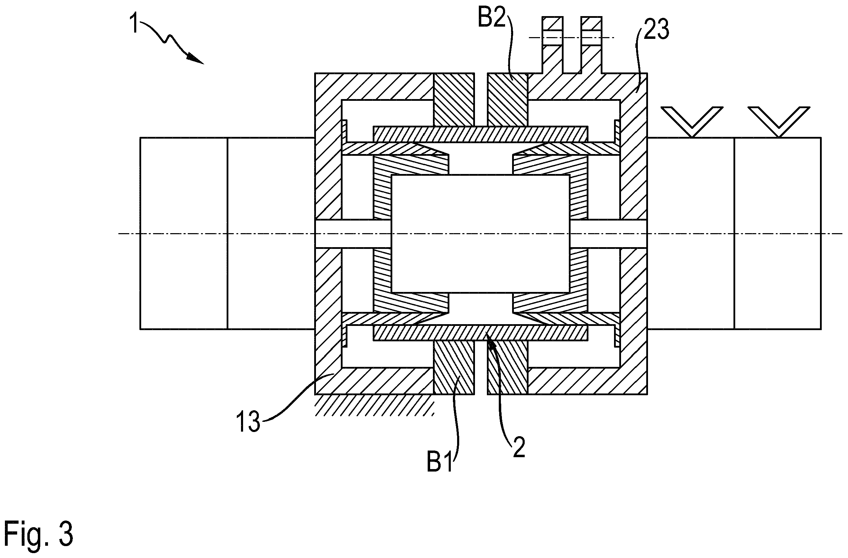

Aus Fig. 3 geht eine schematische Ansicht eines Aktuators 1 entsprechend einer zweiten Ausgestaltungsmöglichkeit hervor, die nicht in den Schutzbereich der Ansprüche fällt. Der Aktuator 1 entspricht dabei im Wesentlichen der Anordnung nach Fig. 2, wobei im Unterschied zu dieser, die Verriegelungselemente nicht antriebsseitig, sondern abtriebsseitig angeordnet sind. Demnach ist ein erstes Verriegelungselement B1 vorgesehen, das angeordnet und eingerichtet ist, eine Relativbewegung zwischen dem feststehenden ersten Gehäuse 13 und dem gemeinsamen Circular Spline 2 zu verhindern. Das zweite Verriegelungselement B2 ist dazu eingerichtet eine Relativbewegung zwischen dem beweglichen zweiten Gehäuse 23 und dem gemeinsamen Circular Spline 2 zu verhindern.

Wird abtriebsseitig das erste Verriegelungselement B1 aktiviert, dann wird die Abtriebsbewegung der ersten Antriebseinheit AE1 über den gemeinsamen Circular Spline 2 verhindert und die Abtriebsbewegung des Aktuators 1 wird ausschließlich über die Antriebsbewegung der zweiten Antriebseinheit AE2 erzeugt.

Wird abtriebsseitig das zweite Verriegelungselement B2 aktiviert, dann wird die Relativbewegung zwischen zweitem Gehäuse 23 und dem gemeinsamen Circular Spline 2 verhindert und die Abtriebsbewegung des Aktuators 1 wird ausschließlich über die Antriebsbewegung der ersten Antriebseinheit AE1 erzeugt. Die erste Antriebseinheit AE1 bewegt dann, über die Drehung des gemeinsamen Circular Spline 2, die gesamte zweite Antriebseinheit AE2 inklusive dem Abtrieb 80 des Aktuators 1.

Im Übrigen wird auf die Ausführung zu Fig. 2 verwiesen.

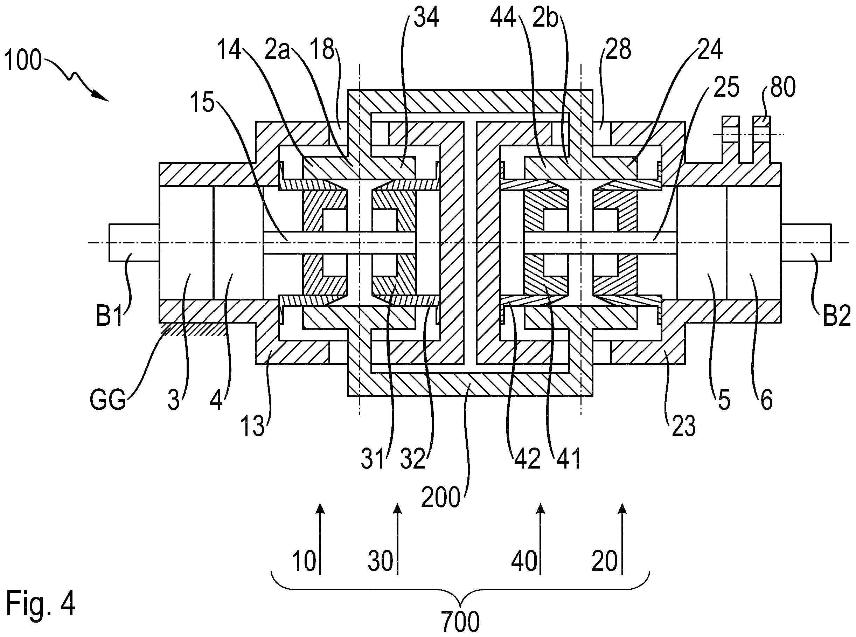

Des Weiteren zeigt Fig. 4 eine schematische Ansicht eines Teils eines Aktuators 100 entsprechend einer Ausführungsform der Erfindung. Ausgehend von der Anordnung gem. Fig. 2 weist die Ausführungsform gem. Fig. 4 ein Getriebe 700 auf, dass sich durch zwei zusätzliche Spannungswellengetriebe kennzeichnet. So lässt sich die Redundanz des Aktuators 1 noch weiter erhöhen.

Demnach umfasst der Aktuator 100 zusätzlich ein drittes Spannungswellengetriebe 30 und ein viertes Spannungswellengetriebe 40, die axial zwischen dem ersten Spannungswellengetriebe 10 und zweiten Spannungswellengetriebe 20 angeordnet sind. Das erste und dritte Spannungswellengetriebe 10, 30 sind innerhalb des drehfesten ersten Gehäuses 13 angeordnet. Das zweite und vierte Spannungswellengetriebe 20, 40 sind innerhalb des drehbaren zweiten Gehäuses 23 angeordnet.

Das dritte Spannungswellengetriebe 30 umfasst einen dritten Wave Generator 31, einen dritten Flexspline 32 und einen dritten Circular Spline 34. Bei dem dritten Wave Generator 31 handelt es sich um eine elliptische Stahlscheibe, welche den Antrieb des Getriebes 30 bildet. Bei dem dritten Flexspline 32 handelt es sich um eine verformbare zylindrische Stahlbuchse mit einer dritten Außenverzahnung. Bei dem Circular Spline 34 handelt es sich um einen starren zylindrischen Außenring mit einer zur dritten Außenverzahnung korrespondierenden Innenverzahnung. Der dritte Wave Generator 31 ist, wie auch der erste Wave Generator 11 des ersten Spannungswellengetriebes 10, mit der ersten Antriebswelle 15 verbunden, wobei die erste Antriebswelle 15 mittels der Teilantriebe 3 und 4 angetrieben werden kann. Der dritte Flexspline 32 ist innerhalb des ersten Getriebegehäuses 13 mit diesem Gehäuse 13 drehfest verbunden.

Anstelle des Kopplungselements 2 ist nunmehr ein Kopplungselement 2a vorgesehen, das das erste und das dritte Spannungswellengetriebe 10, 30 miteinander koppelt. Das Kopplungselement 2a ist demnach als ein gemeinsamer Außenring mit Innenverzahnung ausgeführt, wobei die Innenverzahnung des Außenrings 2a zu der ersten Außenverzahnung des ersten Flexsplines 12 des Spannungswellengetriebes 10 und zu der dritten Außenverzahnung des dritten Flexsplines 32 des Spannungswellengetriebes 30 korrespondiert. Das Kopplungsmittel 2a kann auch als ein zweiter gemeinsamer Circular Spline bezeichnet werden.

Das vierte Spannungswellengetriebe 40 umfasst einen vierten Wave Generator 41, einen vierten Flexspline 42 und einen vierten Circular Spline 44. Bei dem vierten Wave Generator 41 handelt es sich um eine elliptische Stahlscheibe, welche den Antrieb des Getriebes 40 bildet. Bei dem vierten Flexspline 42 handelt es sich um eine verformbare zylindrische Stahlbuchse mit einer vierten Außenverzahnung. Bei dem vierten Circular Spline 44 handelt es sich um einen starren zylindrischen Außenring mit einer zur vierten Außenverzahnung korrespondierenden Innenverzahnung. Der vierte Wave Generator 41 ist, wie auch der zweite Wave Generator 21 des zweiten Spannungswellengetriebes 20, mit der zweiten Antriebswelle 25 verbunden, wobei die zweite Antriebswelle 25 weiterhin mittels der Teilantriebe 5 und 6 angetrieben werden kann. Der vierte Flexspline 42 ist innerhalb des drehbar angeordneten zweiten Getriebegehäuses 23 mit diesem Gehäuse 23 verbunden.

Das zweite und vierte Spannungswellengetriebe 20, 40 werden mittels eines Kopplungselements 2b miteinander gekoppelt. Das Kopplungselement 2b ist demnach als ein gemeinsamer Außenring mit Innenverzahnung ausgeführt, wobei die Innenverzahnung des Außenrings 2b zu der zweiten Außenverzahnung des zweiten Flexsplines 22 des Spannungswellengetriebes 20 und zu der vierten Außenverzahnung des vierten Flexsplines 42 des Spannungswellengetriebes 40 korrespondiert. Das Kopplungsmittel 2b kann auch als ein dritter gemeinsamer Circular Spline bezeichnet werden.

Das erste und zweite Gehäuse 13, 23 weisen jeweils in Umfangsrichtung eine Mehrzahl an Ausnehmungen auf. So weist das erste Gehäuse 13 eine Mehrzahl an ersten Ausnehmungen 18 auf, wobei es sich vorliegend um sich in Umfangsrichtung erstreckende Schlitze handelt. Das zweite Gehäuse 23 weist demnach eine Mehrzahl an zweiten Ausnehmungen 28 auf, wobei es sich ebenfalls um sich in Umfangsrichtung erstreckende Schlitze handelt. Durch die Ausnehmungen 18, 28 sind Verbindungselemente 200 zum drehfesten Verbinden der zweiten und dritten gemeinsamen Circular Splines 2a, 2b geführt. Bei den Verbindungselementen 200 handelt es sich um Verbindungsstege die umgangssprachlich auch als Kopplungsarme bezeichnet werden.

Die Verbindungselemente 200 verlaufen zumindest teilweise außerhalb der Gehäuse 13, 23. Gemäß dieser Ausführungsform sind beispielhaft jeweils sechs Schlitze 18, 28 vorgesehen, die sich in Umfangsrichtung jeweils über einen Winkel von ungefähr 40° erstrecken. Ein solcher Winkel ermöglicht einerseits noch einen ausreichend gro-ßen Stellwinkel bei ausreichend steifer bzw. fester Struktur.

Das dritte Spannungswellengetriebe 30 weist einen dritten Wave Generator 31 auf, der mittels eines zumindest ersten Teilantriebs 3, 4 antreibbar ist, wobei der dritte Wave Generator 31 innerhalb eines mit dem ersten Gehäuse 13 drehfest verbunden dritten Flexspline 32 angeordnet ist, wobei der dritte Flexspline 32 eine dritte Außenverzahnung aufweist.

Das vierte Spannungswellengetriebe weist einen vierten Wave Generator 41 auf, der mittels eines zumindest zweiten Teilantriebs 5, 6 antreibbar ist, wobei der vierte Wave Generator 41 innerhalb eines mit dem zweiten Gehäuse 23 drehfest verbundenen vierten Flexspline 42 angeordnet ist, wobei der vierte Flexspline 42 eine vierte Außenverzahnung aufweist.

Das zweite Kopplungselement 14 ist als ein zweiter Circular Spline ausgebildet, wobei der zweite Circular Spline eine Innenverzahnung aufweist, die zu der ersten und dritten Außenverzahnung korrespondiert. Das dritte Kopplungselement 24 ist als ein dritter Circular Spline ausgebildet, wobei der dritte Circular Spline eine Innenverzahnung aufweist, die zu der zweiten und vierten Außenverzahnung korrespondiert.

Die Teilantriebe 3, 4 sind weiterhin derselben ersten Antriebswelle 15 zugeordnet während die Teilantriebe 5, 6 der zweiten Antriebswelle 25 zugeordnet sind. Die Verriegelungseinheiten B1, B2 sind antriebsseitig angeordnet, jedoch an einer dem Getriebe 700 abgewandten Seite der Teilantriebe 3, 4 bzw. 5, 6.

Die Versorgung der Teilantriebe 3 bis 6 erfolgt bevorzugt kabelgebunden. Die Ausnehmungen 18, 28 geben eine Winkelbeschränkung vor. In diesem Fall kann auf eine kabelgebundene Versorgung zurückgegriffen werden, die gegenüber einem Schleifringsystem verschleißärmer ist.

Die Ausführungsform gemäß Fig. 4 ist vorteilhaft gegenüber der Anordnung nach Fig. 2 und 3, da das Bauteil Flexspline nunmehr vierfach vorliegt. Der Flexspline ist ein Bauteil, das einer großen Belastung ausgesetzt ist. Durch Überlast oder Materialermüdung könnte es brechen oder reißen und dadurch versagen. Ein Versagen des Flexsplines hätte, sofern kein redundanter Lastpfad vorgesehen ist, ein Freidrehen einer Antriebseinheit zur Folge.

Durch die zusätzlichen Spannungswellengetriebe 30, 40 wird ein zweiter Lastpfad bereitgestellt. Dies wird anhand der Fig. 5 näher erläutert.

Fig. 5 zeigt denselben Aktuator 100 aus Fig. 4. Ausgehend von der ersten Antriebseinheit AE1 sind zwei von mehreren möglichen Lastpfaden 98, 99 eingezeichnet. Der Drehmomentenfluss des ersten Lastpfades 98 läuft ausgehend von der ersten Antriebseinheit AE1 über die Antriebswelle 15, den ersten Wave Generator 11, den ersten Flexspline 12, den Circular Spline 2a über das Verbindungselement 200 hin zum Circular Spline 2b und im Anschluss über den zweiten Flexspline 22 zum Abtrieb 80.

Der Drehmomentenfluss des zweiten Lastpfades 99 läuft ausgehend von der ersten Antriebseinheit AE1 über die Antriebswelle 15, den dritten Wave Generator 31, den dritten Flexspline 32, den Circular Spline 2a über das Verbindungselement 200 hin zum Circular Spline 2b und im Anschluss über den vierten Flexspline 42 zum Abtrieb 80.

Für die zweite Antriebseinheit AE2 ergeben sich analog ebenfalls zwei Lastpfade von der Antriebswelle 25 über den Wave Generator 41 und den Flexspline 42 bzw. über den Wave Generator 21 und den Flexspline 22 auf das Gehäuse 23 und somit zum Abtrieb 80.

Sollte bspw. der dritte Flexspline 32 bspw. durch Bruch oder Riss versagen, so wäre auch der zweite Lastpfad unterbrochen und könnte keine Antriebsleistung mehr übertragen. Die Antriebsleistung kann in diesem Fall jedoch vorteilhaft über den verbleibenden ersten Lastpfad übertragen werden.

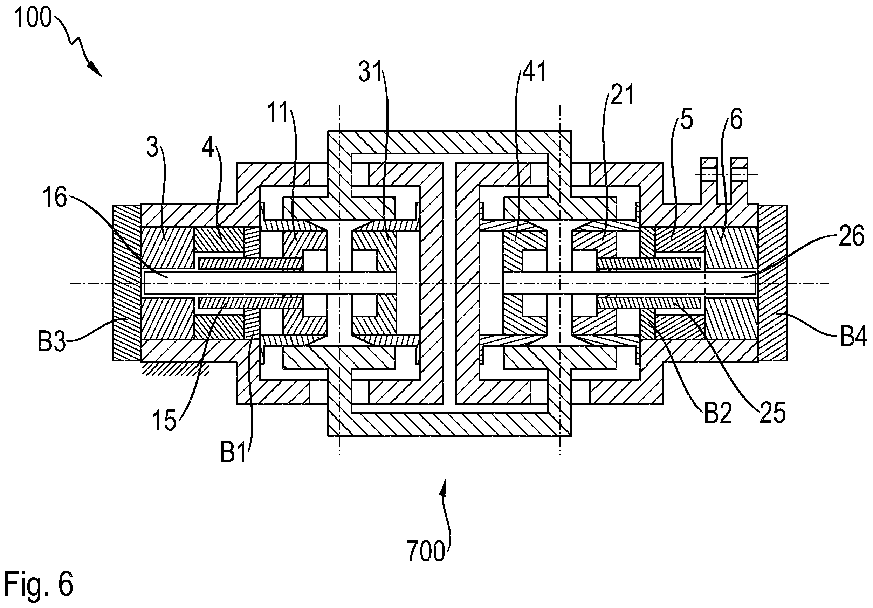

Aus Fig. 6 geht eine schematische Ansicht eines Aktuators 100 entsprechend einer weiteren Ausgestaltungsmöglichkeit der Erfindung hervor. Der Aktuator 100 entspricht dabei im Wesentlichen der Ausführungsform nach Fig. 4, wobei im Unterschied zu dieser, die Teilantriebe 3, 4 sowie 5, 6 nicht auf einer gemeinsamen ersten und zweiten Antriebswelle 15, 25 sondern jeweils auf einer separaten Antriebswelle angeordnet sind.

Die erste Antriebswelle 15 ist als eine Hohlwelle ausgeführt und koaxial zu einer Antriebswelle 16 angeordnet. Die erste Antriebswelle 15 ist dem zweiten Teilantrieb 4 zugeordnet. Die erste Antriebswelle 15 ist mit dem ersten Wave Generator 11 verbunden. Demnach ist die dritte Antriebswelle 16 dem ersten Teilantrieb 3 zugeordnet. Die dritte Antriebswelle 16 ist mit dem dritten Wave Generator 31 verbunden.

Die zweite Antriebswelle 25 ist als eine Hohlwelle ausgeführt und koaxial zu einer Antriebswelle 26 angeordnet. Die zweite Antriebswelle 25 ist dem dritten Teilantrieb 5 zugeordnet und mit dem zweiten Wave Generator 21 verbunden. Demnach ist die vierte Antriebswelle 26 dem vierten Teilantrieb 6 zugeordnet und mit dem vierten Wave Generator 41 verbunden.

Ferner ist einer jeden Antriebswelle 15, 16, 25, 26 ein separates Verriegelungselement zugeordnet. So ist der ersten Antriebswelle 15 ein erstes Verriegelungselement B1, der zweiten Antriebswelle 25 ein zweites Verriegelungselement B2, der dritten Antriebswelle 16 ein drittes Verriegelungselement B3 sowie der vierten Antriebswelle 26 ein viertes Verriegelungselement B4 zugeordnet. Das erste und zweite Verriegelungselement B1, B2 sind jeweils axial zwischen dem ihr zugeordneten Teilantrieb 4, 5 und dem durch diesen Teilantrieb angetriebenen Wave Generator 11, 21 angeordnet. Das dritte und vierte Verriegelungselement B3, B4 sind jeweils an einer dem Getriebe 700 abgewandten Seite des entsprechenden Teilantriebs 3, 6 angeordnet. Im Übrigen wird auf die Ausführung zu Fig. 4 verwiesen.

Die in Fig. 6 gezeigte Darstellung eines erfindungsgemäßen Aktuators 100 ermöglicht eine sichere Verriegelung auch im folgenden Fehlerszenario: Der Teilantrieb 3 ist nicht mehr kontrollierbar und treibt in Folge unkontrolliert die Antriebswelle 16 an (sog. "Powered Runaway"). Der Teilantrieb 4 kann in dieser Situation bestenfalls den unkontrollierbar gewordenen Teilantrieb 3 kompensieren. Das Verriegelungselement B3 wird von derselben Regeleinheit gesteuert bzw. geregelt wie der Teilantrieb 3 und ist entsprechend ebenfalls nicht mehr steuerbar bzw. regelbar. Entsprechend muss das Verriegelungselement B1 zum Verriegeln des in Fig. 6 links dargestellten Teilaktuators herangezogen werden, da eine Verriegelungsfunktion mittels des Teilantriebs 4 nicht sicher gewährleistet werden kann und die Verriegelung mittels des Verriegelungselement B1 zudem leistungseffizienter ist.

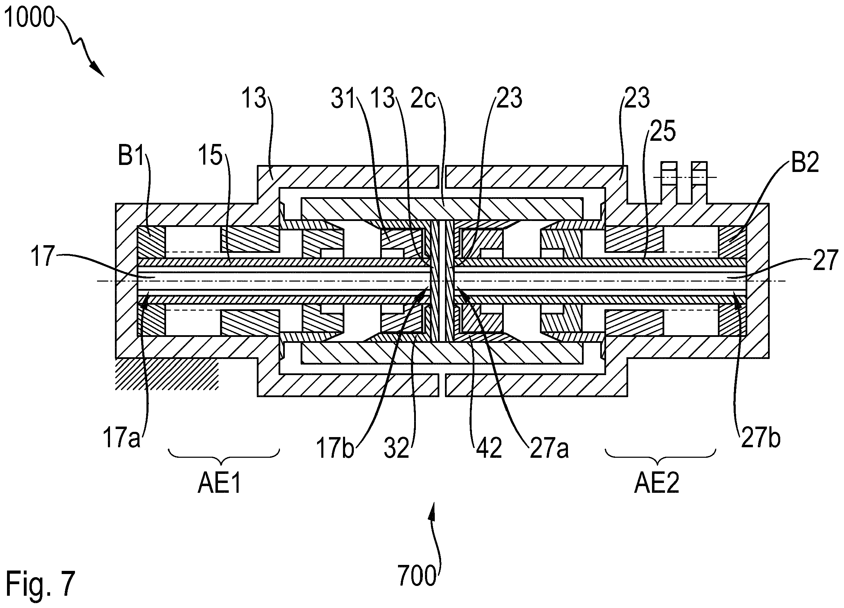

Aus Fig. 7 geht eine schematische Ansicht eines Aktuators 1000 entsprechend einer weiteren Ausgestaltungsmöglichkeit der Erfindung hervor. Der Aktuator 1000 entspricht dabei im Wesentlichen der Ausführungsform nach Fig. 4, wobei im Unterschied zu dieser, die zwei gemeinsamen Antriebswellen 15, 25 jeweils als Hohlwelle ausgebildet sind, durch welche jeweils ein Stützelement 17, 27 geführt ist. Die Stützelemente sind jeweils an einem axialen Ende 17a bzw. 27b mit dem jeweiligen Gehäuse 13, 23 drehfest verbunden. An dem jeweils anderen axialen Ende 17b bzw. 27a sind die Stützelemente 17, 27 mit einem im Kopplungselement 2c drehbar gelagerten sowie gegenüber dem Kopplungselement 2c abdichtenden Flansch verbunden, der keine unmittelbare Verbindung zu dem jeweiligen Gehäuse 13, 23 aufweist.

Ein erstes Stützelement 17, das als ein Stützrohr ausgeführt ist, ist innerhalb des ersten Gehäuses 13 angeordnet, wobei der dritte Wave Generator 31 drehbar an diesem Stützelement 17 gelagert und mit der ersten Antriebswelle 15 verbunden sowie der dritte Flexspline drehfest mit diesem Stützelement verbunden ist. Ein zweites Stützelement 27, das ebenfalls als ein Stützrohr ausgebildet ist, ist innerhalb des zweiten Gehäuses 23 angeordnet, wobei der vierte Wave Generator 41 drehbar an diesem Stützelement 27 gelagert und mit der zweiten Antriebswelle 25 verbunden sowie der vierte Flexspline drehfest mit diesem Stützelement verbunden ist.

Gut zu erkennen ist, wie das erste Stützelement 17 mit seinem axialen Ende 17a an dem ersten Gehäuse 13 befestigt ist, während es mit seinem anderen axialen Ende 17b mit dem als Flansch ausgeführten Bauteil befestigt ist, das keine direkte Verbindung zum Gehäuse 13 aufweist. Ebenfalls gut zu erkennen ist, wie das zweite Stützelement 27 mit seinem axialen Ende 27b an dem zweiten Gehäuse 23 befestigt ist, während es mit seinem anderen axialen Ende 27a mit dem als Flansch ausgeführten Bauteil befestigt ist, das keine direkte Verbindung zum Gehäuse 23 aufweist. Die drehfeste Abstützung der Flexsplines 32, 42 erfolgt demnach zusätzlich über die Stützrohre 17 bzw. 27. welche jeweils durch die jeweilige Motorwelle 15, 25 hindurchgeführt sind.

Die zwei Verriegelungselemente B1, B2 sind jeweils koaxial zu den Stützelementen 17, 27 angeordnet. Die Antriebseinheiten sind axial zwischen den Verriegelungselementen B1, B2 und dem Getriebe 700 angeordnet.

Diese Ausführungsform ermöglicht es im Unterschied zu Fig. 4, dass die Kopplung des zweiten Circular Spline 2a mit dem dritten Circular Spline 2b innerhalb der Gehäuse 13, 23 angeordnet sein kann. Das Verbindungsmittel 200 wird demnach durch einen gemeinsamen Circular Spline 2c ersetzt, dessen Innenverzahnung mit den Au-ßenverzahnungen der vier Flexsplines 12, 22, 32, 42 korrespondiert. Es hat sich herausgestellt, dass das Verbindungsmittel 200 sich konstruktiv einfacher als Verbindung der einzelnen Circular Splines realisieren lässt.

Das zweite und dritte Kopplungselement, also der zweite und dritte Circular Spline 2a, 2b sind demnach als eine integrale Baueinheit 2c ausgeführt. Es ist jedoch auch denkbar, den zweiten und dritten Circular Spline 2a, 2b drehfest miteinander zu verbinden.

Anders ausgedrückt, müssen die Circular Splines 2a, 2b nicht mehr durch außerhalb des Gehäuses verlaufende Verbindungsmittel 200 verbunden werden. Somit kann auch auf die Aussparungen 18, 28 verzichtet werden, wodurch auch die Winkelbegrenzung wegfällt, sodass zusätzlich ein größerer Stellbereich bewirkt werden kann. Bei der Ausführungsform gemäß Fig. 7, bei welcher die gegeneinander rotierenden Bauteile über einen größeren Winkelbereich rotieren können, ist es bevorzugt, wenn die Teilantriebe 5, 6 kabellos, insbesondere über Schleifringe versorgt werden. Mittels der erfindungsgemäßen Ausgestaltungen eines Aktuators kann dabei dessen Schadenanfälligkeit reduziert und damit seine Zuverlässigkeit gesteigert werden.

### Angaben alle Figuren 2 bis 7 betreffend:

Die Anordnungen der Figuren 2 bis 7 sind mit Verriegelungselementen B1 bis B4 versehen. Es wird an dieser Stelle darauf hingewiesen, dass eine jede dieser Ausführungsformen statt der Verriegelungselemente Mittel zum Kurzschließen aufweisen kann. Ausnahme: Bei der Ausführungsform gemäß Fig. 3 ist das "Kurzschlussverfahren" nicht möglich, weil die Bremswirkung antriebsseitig erfolgen würde.

Eine Bremswirkung kann ohne Verriegelungselemente erzielt werden, indem sich eine Antriebseinheit selbst bremst. Dies soll nachfolgend näher erläutert werden:

Bei einem fehlerhaften Teilantrieb 3, 4, 5, 6 kann eine Bremswirkung erzielt werden, indem die Motorphasen des fehlerhaften Teilantriebs 3, 4, 5, 6 kurzgeschlossen werden. Das Kurzschließen bewirkt, dass aufgrund der durch die Drehung der Motorwelle induzierten Spannung ein Phasenstrom erzeugt wird, der zu einem auf die Motorwelle des Teilantriebs wirkenden elektromagnetischen Bremsmoments führt. So sind mehrere Mittel vorzusehen, die dazu eingerichtet sind, einen Kurzschluss der Motorphasen in einem jeden Teilantrieb zu erzeugen. Eine solche beschriebene Bremswirkung durch Kurzschließen der Motorphasen ist sowohl bei einem Aktuator mit zwei Teilantrieben 3, 4 (Fig. 2) also auch mit vier Teilantrieben 3, 4, 5, 6 (Fig. 4, 5, 6, 7) möglich.

Bei einem Aktuator mit vier Teilantrieben 3, 4, 5, 6 gemäß der Fig. 4, 5, 6, 7 ist eine Bremswirkung ohne Verriegelungselemente und ohne Kurzschließen der Motorphasen möglich. Hierfür ist vorgesehen, dass bei einem fehlerhaften Teilantrieb der funktionsfähige Teilantrieb derselben Antriebseinheit AE1, AE2 eingerichtet ist, d.h. insbesondere derart angesteuert wird, dass die Abtriebsbewegung der fehlerhaften Antriebseinheit AE1, AE2 "aktiv" gebremst wird. Mit anderen Worten: Die fehlerhafte Antriebseinheit AE1, AE2 bremst sich durch den noch verbleibenden Teilantrieb selbst. Hierfür ist ein entsprechender Regelalgorithmus implementiert. Zusätzliche Hardware ist nicht erforderlich.

Bei einem Aktuator mit vier Teilantrieben 3, 4, 5, 6 kann das "Kurzschlussverfahren" mit dem Verfahren der "aktiven" Bremsung der Antriebseinheit kombiniert werden. D.h., der fehlerhafte Teilantrieb wird kurzgeschlossen, während der funktionierende Teilantrieb derselben Antriebseinheit die Antriebseinheit bremst.

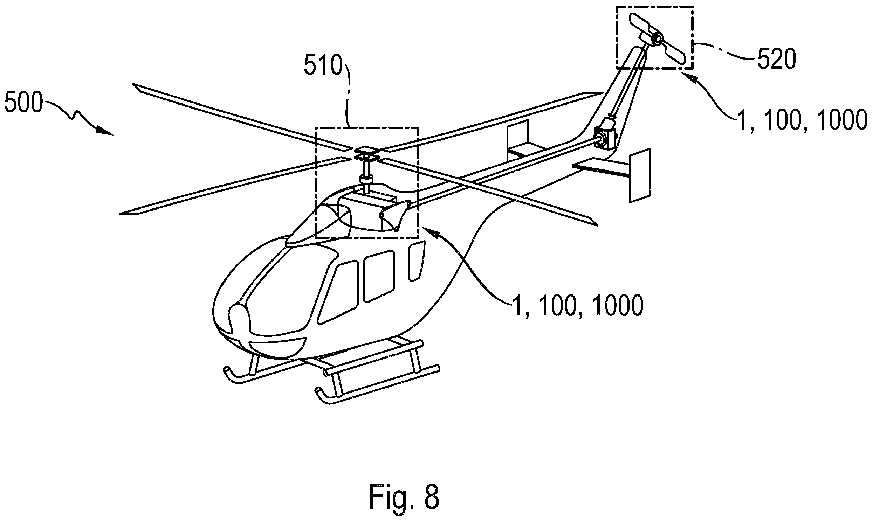

Fig. 8 schließlich zeigt einen Hubschrauber 500 mit mehreren Aktuatoren 1, 100, 1000. Die Aktuatoren können insbesondere Teil einer Primärsteuerung 510 der Taumelscheibe und eines Einzelblatts sein. Die Aktuatoren können aber auch Teil einer Einzelblattsteuerung oder Kollektivsteuerung 520 des Heckrotors sein.

### Bezuaszeichen

### Stand der Technik

- 50: Teilantrieb
- 51: Teilantrieb
- 62: Aktuator
- 63: Getriebe
- 64: Getriebestufe
- 65: Getriebestufe
- 66: Antriebswelle
- 67: Antriebswelle
- 68: Exzenter
- 69: Exzenter
- 70: Exzenter
- 71: Exzenter
- 72: Kurvenscheibe
- 73: Kurvenscheibe
- 74: Kurvenscheibe
- 75: Kurvenscheibe
- 76: Bolzen
- 77: Bolzen
- 78: Bolzenring
- 63: Getriebe

### Erfindung

- 1: Aktuator
- 100: Aktuator
- 1000: Aktuator
- 2: Kopplungsmittel, Circular Spline
- 2a: Kopplungsmittel, Circular Spline
- 2b: Kopplungsmittel, Circular Spline
- 2c: Kopplungsmittel, Circular Spline
- 3: Teilantrieb
- 4: Teilantrieb
- 5: Teilantrieb
- 6: Teilantrieb
- 7, 700: Getriebe
- 9: elektrische Versorgung, kabelgebunden, kabellos, Schleifring
- 10: Spannungswellengetriebe
- 11: Wave Generator
- 12: Flexspline
- 13: Gehäuse
- 14: Circular Spline
- 15: Antriebswelle
- 17: Stützelement
- 17a: axiales Ende
- 17b: axiales Ende
- 18: Ausnehmung(en)
- 20: Spannungswellengetriebe
- 21: Wave Generator
- 22: Flexspline
- 23: Gehäuse
- 24: Circular Spline
- 25: Antriebswelle
- 27: Stützelemente
- 27a: axiales Ende
- 27b: axiales Ende
- 28: Ausnehmung(en)
- 30: Spannungswellengetriebe
- 31: Wave Generator
- 32: Flexspline
- 34: Circular Spline
- 40: Spannungswellengetriebe
- 41: Wave Generator
- 42: Flexspline
- 44: Circular Spline
- 98: Lastpfad
- 99: Lastpfad
- 80: Abtrieb
- 200: Verbindungselemente
- 500: Hubschrauber
- 510: Hauptrotor
- 520: Heckrotor
- A: Achse
- AE1: Antriebseinheit
- AE2: Antriebseinheit
- B1: Verriegelungselement, Bremse
- B2: Verriegelungselement, Bremse
- B3: Verriegelungselement, Bremse
- B4: Verriegelungselement, Bremse
- GG: Getriebegehäuse

## Patentansprüche

1. Aktuator (1; 100; 1000) für Luftfahrtanwendungen, insbesondere für eine Rotorblattverstellung eines Hubschraubers, umfassend eine elektromechanische Antriebseinrichtung und ein nachgeschaltetes Getriebe (7; 700), wobei die Antriebseinrichtung über das Getriebe (7; 700) mit einem Abtrieb (80) verbunden ist, wobei die Antriebseinrichtung in unabhängig voneinander betreibbare Teilantriebe (3, 4, 5, 6) aufgeteilt ist, wobei zumindest zwei Teilantriebe (3, 4, 5, 6) räumlich voneinander getrennt sind, indem das Getriebe (7; 700) zwischen diesen Teilantrieben (3, 4, 5, 6) vorgesehen ist, wobei es sich bei dem Getriebe (7, 700) um zumindest zwei über zumindest ein erstes Kopplungselement (2) miteinander gekoppelte Spannungswellengetriebe (10, 20, 30, 40) handelt, wobei ein erstes Spannungswellengetriebe (10) innerhalb eines drehfesten ersten Gehäuses (13) angeordnet ist, und wobei ein zweites Spannungswellengetriebe (20) innerhalb eines drehbaren zweiten Gehäuses (23) angeordnet ist, wobei das zweite Gehäuse (23) mit dem Abtrieb (80) verbunden ist, **dadurch gekennzeichnet, dass** der Aktuator ferner ein drittes Spannungswellengetriebe (30) und ein viertes Spannungswellengetriebe (40) umfasst, die axial zwischen dem ersten (10) und zweiten Spannungswellengetriebe (20) angeordnet sind, wobei anstelle des ersten Kopplungselements (2) nunmehr ein zweites Kopplungselement (2a) vorgesehen ist, das das erste und das dritte Spannungswellengetriebe (10; 30) miteinander koppelt, wobei ein drittes Kopplungselement (2b) vorgesehen ist, das das zweite (20) und das vierte Spannungswellengetriebe (40) miteinander koppelt, und wobei das zweite (2a) und das dritte Kopplungselement (2b) drehfest miteinander verbunden sind.

2. Aktuator nach Anspruch 1, wobei das Getriebe (7; 700) über zumindest zwei Antriebswellen (15, 25) verfügt, wobei die eine Antriebswelle (15) dem mindestens einen auf der einen Seite des Getriebes (7; 700) liegenden Teilantrieb (3; 4) und die andere Antriebswelle (25) dem mindestens einen auf der anderen Seite des Getriebes (7; 700) liegenden Teilantrieb (5; 6) zugeordnet ist, und wobei das Getriebe (7; 700) Antriebsleistungen der Teilantriebe (3; 4; 5; 6) zum Abtrieb (80) aufsummiert.

3. Aktuator nach Anspruch 1 oder 2, wobei
- das erste Spannungswellengetriebe (10) einen ersten Wave Generator (11) aufweist, der mittels eines zumindest ersten Teilantriebs (3, 4) antreibbar ist, wobei der erste Wave Generator (11) innerhalb eines mit dem ersten Getriebegehäuse (13) drehfest verbundenen ersten Flexspline (12) angeordnet ist, wobei der erste Flexspline (12) eine erste Außenverzahnung aufweist,
- das zweite Spannungswellengetriebe (20) einen zweiten Wave Generator (21) aufweist, der mittels eines zumindest zweiten Teilantriebs (5, 6) antreibbar ist, wobei der zweite Wave Generator (21) innerhalb eines mit dem zweiten Gehäuse (23) drehfest verbundenen zweiten Flexspline (22) angeordnet ist, wobei der zweite Flexspline (22) eine zweite Außenverzahnung aufweist,
- das Kopplungselement (2) als ein einteiliger Circular Spline oder ein mehrteiliger Circular Spline ausgebildet ist und wobei der Circular Spline eine bzw. mehrere Innenverzahnungen aufweist, die zu der ersten und zweiten Au-ßenverzahnung korrespondiert.

4. Aktuator nach einem der vorhergehenden Ansprüche, wobei beidseitig des Getriebes (7; 700) jeweils zwei Teilantriebe (3; 4; 5; 6) vorgesehen sind.

5. Aktuator nach einem der vorhergehenden Ansprüche, wobei zumindest ein Verriegelungselement (B1, B2, B3, B4) je Seite des Getriebes (7, 700) vorgesehen ist, das antriebsseitig angeordnet und eingerichtet ist, zumindest einen der Teilantriebe festzuhalten.

6. Aktuator nach einem der vorhergehenden Ansprüche 1 bis 4, wobei zumindest ein Verriegelungselement (B1; B2; B3; B4) je Seite des Getriebes (7; 700) vorgesehen ist, das abtriebsseitig angeordnet und eingerichtet ist, eine Relativbewegung zwischen jeweils einem der zwei Gehäuse (13; 23) und dem Kopplungselement (2) zu verhindern.

7. Aktuator nach einem der vorhergehenden Ansprüche 2 bis 6, wobei vier Teilantriebe vorgesehen sind, wobei jeweils zwei dieser vier Teilantriebe (3, 4; 5, 6) eine gemeinsame Antriebswelle (15; 25) zugeordnet ist.

8. Aktuator nach einem der vorhergehenden Ansprüche 2 bis 6, wobei vier Teilantriebe vorgesehen sind und jedem dieser Teilantriebe eine separate Antriebswelle (15; 25; 16; 26) zugeordnet ist.

9. Aktuator nach einem der vorhergehenden Ansprüche,
- wobei das erste (10) und dritte Spannungswellengetriebe (30) innerhalb des drehfesten ersten Gehäuses (13) angeordnet ist,
- wobei das zweite (20) und vierte Spannungswellengetriebe (40) innerhalb des drehbaren zweiten Gehäuses (23) angeordnet ist,
- wobei das erste (13) und zweite Gehäuse (23) in seiner jeweiligen Umfangsrichtung eine Mehrzahl an Ausnehmungen (18, 28), insbesondere sich in Umfangsrichtung erstreckende Schlitze, aufweisen, durch welche Ausnehmungen Verbindungselemente (200) zum drehfesten Verbinden des zweiten (2a) und dritten Kopplungselements (2b) geführt sind, sodass die Verbindungselemente (200) zumindest teilweise außerhalb der Gehäuse (13, 23) angeordnet sind.

10. Aktuator nacheinem der vorhergehenden Ansprüche, wobei
- das dritte Spannungswellengetriebe (30) einen dritten Wave Generator (31) aufweist, der mittels eines zumindest ersten Teilantriebs (3; 4) antreibbar ist, wobei der dritte Wave Generator (31) innerhalb eines mit dem ersten Gehäuse (13) drehfest verbundenen dritten Flexspline (32) angeordnet ist, wobei der dritte Flexspline (32) eine dritte Außenverzahnung aufweist,
- das vierte Spannungswellengetriebe (40) einen vierten Wave Generator (41) aufweist, der mittels eines zumindest zweiten Teilantriebs (5; 6) antreibbar ist, wobei der vierte Wave Generator (41) innerhalb eines mit dem zweiten Gehäuse (23) drehfest verbundenen vierten Flexspline (42) angeordnet ist, wobei der vierte Flexspline (42) eine vierte Außenverzahnung aufweist,
- das zweite Kopplungselement (2a) als ein zweiter Circular Spline ausgebildet ist, wobei der zweite Circular Spline eine Innenverzahnung aufweist, die zu der ersten und dritten Außenverzahnung korrespondiert,
- das dritte Kopplungsmittel (2b) als ein dritter Circular Spline ausgebildet ist, wobei der dritte Circular Spline eine Innenverzahnung aufweist, die zu der zweiten und vierten Außenverzahnung korrespondiert.

11. Aktuator nach einem der Ansprüche 8 bis 10, wobei jeweils zwei Wave Generatoren (11; 21; 31; 41) auf einer gemeinsamen Motorantriebswelle (15, 25) angeordnet sind.

12. Aktuator nach einem der Ansprüche 8 bis 10, wobei die Wave Generatoren (11; 21; 31; 41) jeweils auf separaten Antriebswellen angeordnet sind.

13. Aktuator nach einem der Ansprüche 8 bis 10, wobei
- die zwei gemeinsamen Antriebswellen (15; 25) jeweils als Hohlwelle ausgebildet sind, durch welche jeweils ein Stützelement (17; 27) geführt ist, das an einem seiner axialen Enden (17a; 27b) mit dem jeweiligen Gehäuse (13; 23) drehfest verbunden ist,
- wobei ein erstes Stützelement (17) innerhalb des ersten Gehäuses (13) angeordnet ist und der dritte Wave Generator (31) drehbar an diesem Stützelement (17) gelagert sowie der dritte Flexspline drehfest mit diesem Stützelement verbunden ist,
- wobei ein zweites Stützelement (27) innerhalb des zweiten Gehäuses (23) angeordnet ist und der vierte Wave Generator (41) drehbar an diesem Stützelement (27) gelagert sowie der vierte Flexspline drehfest mit diesem Stützelement verbunden ist.

14. Hubschrauber (500) mit einem oder mehreren Aktuatoren (1; 100; 1000) nach einem der Ansprüche 1 bis 13.

## Claims

1. Actuator (1; 100; 1000) for aeronautical applications, in particular for a rotor blade adjustment of a helicopter, comprising an electromechanical drive device and a downstream gearing (7; 700), the drive device being connected to an output (80) via the gearing (7; 700), the drive device being divided into sub-drives (3, 4, 5, 6) that can be operated independently of one another, at least two sub-drives (3, 4, 5, 6) being spatially separated from one another by providing the gearing (7; 700) between said sub-drives (3, 4, 5, 6), wherein the gearing (7, 700) is formed by at least two strain-wave gearings (10, 20, 30, 40) that are coupled to one another by means of at least one first coupling element (2), a first strain-wave gearing (10) being arranged within a non-rotatable first housing (13), and a second strain-wave gearing (20) being arranged within a rotatable second housing (23), the second housing (23) being connected to the output (80), **characterised in that** the actuator further comprises a third strain-wave gearing (30) and a fourth strain-wave gearing (40) which are arranged axially between the first strain-wave gearing (10) and the second strain-wave gearing (20), wherein a second coupling element (2a) is now provided instead of the first coupling element (2), the second coupling element coupling the first and the third strain-wave gearings (10; 30) with one another, wherein a third coupling element (2b) is provided, the third coupling element coupling the second (20) and the fourth strain-wave gearings (40) with one another, and wherein the second (2a) and the third coupling elements (2b) are interconnected for conjoint rotation.

2. Actuator according to claim 1, wherein the gearing (7; 700) comprises at least two drive shafts (15, 25), wherein one drive shaft (15) is associated with the at least one sub-drive (3; 4) located on one side of the gearing (7; 700) and the other drive shaft (25) is associated with the at least one sub-drive (5; 6) located on the other side of the gearing (7; 700), and wherein the gearing (7; 700) sums up drive powers of the sub-drives (3; 4; 5; 6) for the output (80) .

3. Actuator according to claim 1 or 2, wherein
- the first strain-wave gearing (10) comprises a first wave generator (11) which is drivable by means of an at least first sub-drive (3, 4), wherein the first wave generator (11) is arranged within a first flex spline (12) that is non-rotatably connected to the first gearing housing (13), wherein the first flex spline (12) comprises a first external tooth system,
- the second strain-wave gearing (20) comprises a second wave generator (21) which is drivable by means of an at least second sub-drive (5, 6), wherein the second wave generator (21) is arranged within a second flex spline (22) that is non-rotatably connected to the second housing (23), wherein the second flex spline (22) comprises a second external tooth system,
- the coupling element (2) is embodied as a single-piece circular spline or as a multi-piece circular spline and wherein the circular spline comprises one or more internal tooth systems that correspond to the first and second external tooth systems.

4. Actuator according to any one of the preceding claims, wherein two sub-drives (3; 4; 5; 6) are provided on each side of the gearing (7; 700).

5. Actuator according to any one of the preceding claims, wherein at least one locking element (B1, B2, B3, B4) is provided on each side of the gearing (7, 700), said locking element being arranged on the drive side and being configured to restrain at least one of the sub-drives.

6. Actuator according to any one of claims 1 to 4, wherein at least one locking element (B1; B2; B3; B4) is provided on each side of the gearing (7; 700), said locking element being arranged on the output side and being configured to prevent relative movement between either one of the two housings (13; 23) and the coupling element (2).

7. Actuator according to any one of claims 2 to 6, wherein four sub-drives are provided, wherein a common drive shaft (15; 25) is respectively assigned to two of said four sub-drives (3, 4; 5, 6).

8. Actuator according to any one of claims 2 to 6, wherein four sub-drives are provided and a separate drive shaft (15; 25; 16; 26) is assigned to each of these sub-drives.

9. Actuator according to any one of the preceding claims,
- wherein the first (10) and the third strain-wave gearings (30) are arranged within the non-rotatable first housing (13),
- wherein the second (20) and the fourth strain-wave gearings (40) are arranged within the rotatable second housing (23),
- wherein the first (13) and second housings (23) comprise in their respective circumferential directions a plurality of recesses (18, 28), in particular slots extending in the circumferential direction, through which recesses connecting elements (200) for non-rotatably connecting the second (2a) and third coupling elements (2b) are guided such that the connecting elements (200) are at least partly arranged outside the housing (13, 23).

10. Actuator according to any one of the preceding claims, wherein
- the third strain-wave gearing (30) comprises a third wave generator (31) which is drivable by means of an at least first sub-drive (3, 4), wherein the third wave generator (31) is arranged within a third flex spline (32) that is non-rotatably connected to the first housing (13), wherein the third flex spline (32) comprises a third external tooth system,
- the fourth strain-wave gearing (40) comprises a fourth wave generator (41) which is drivable by means of an at least second sub-drive (5, 6), wherein the fourth wave generator (41) is arranged within a fourth flex spline (42) that is non-rotatably connected to the second housing (23), wherein the fourth flex spline (42) comprises a fourth external tooth system,
- the second coupling element (2a) is embodied as a second circular spline, wherein the second circular spline comprises an internal tooth system that corresponds to the first and third external tooth systems,
- the third coupling element (2b) is embodied as a third circular spline, wherein the third circular spline comprises an internal tooth system that corresponds to the second and fourth external tooth system.

11. Actuator according to any one of claims 8 to 10, wherein two wave generators (11; 21; 31; 41) are respectively arranged on a common motor drive shaft (15, 25).

12. Actuator according to any one of claims 8 to 10, wherein the wave generators (11; 21; 31; 41) are respectively arranged on separate drive shafts.

13. Actuator according to any one of claims 8 to 10, wherein
- the two common drive shafts (15; 25) are respectively embodied as a hollow shaft, through which a supporting element (17; 27) is guided that is non-rotatably connected at one of its axial ends (17a; 27b) to the respective housing (13; 23),
- wherein a first supporting element (17) is arranged within the first housing (13), wherein the third wave generator (31) is rotatably mounted to this supporting element (17), and wherein the third flex spline is non-rotatably connected to this supporting element,
- wherein a second supporting element (27) is arranged within the second housing (23), wherein the fourth wave generator (41) is rotatably mounted to this supporting element (27), and wherein the fourth flex spline is non-rotatably connected to this supporting element.

14. Helicopter (500) comprising one or more actuators (1; 100; 1000) according to any one of claims 1 to 13.

## Revendications

1. Actionneur (1 ; 100 ; 1000) destiné à des applications aéronautiques, en particulier pour un réglage de pale de rotor d'un hélicoptère, comprenant un dispositif d'entraînement électromécanique et un engrenage(7 ; 700) placé en aval, dans lequel le dispositif d'entraînement est relié à une sortie (80) par l'intermédiaire de l'engrenage(7 ; 700), dans lequel le dispositif d'entraînement est divisé en sous-unités d'entraînement (3, 4, 5, 6) pouvant fonctionner indépendamment les unes des autres, dans lequel au moins deux sous-unités d'entraînement (3, 4, 5, 6) sont séparées spatialement l'une de l'autre, l'engrenage(7 ; 700) étant fourni entre lesdites sous-unités d'entraînement (3, 4, 5, 6), dans lequel l'engrenage(7, 700) correspond à au moins deux engrenages à onde de déformation (10, 20, 30, 40) couplés l'un à l'autre par l'intermédiaire d'au moins un premier élément de couplage (2), dans lequel un premier engrenage à onde de déformation (10) est agencé à l'intérieur d'un premier carter (13) solidaire en rotation, et dans lequel un deuxième engrenage à onde de déformation (20) est agencé à l'intérieur d'un second carter (23) rotatif, dans lequel le second carter (23) est relié à la sortie (80), **caractérisé en ce que** l'actionneur comprend en outre un troisième engrenage à onde de déformation (30) et un quatrième engrenage à onde de déformation (40) qui sont agencés de manière axiale entre les premier (10) et deuxième (20) engrenages à onde de déformation, dans lequel un deuxième élément de couplage (2a) couplant les premier et troisième engrenages à onde de déformation (10 ; 30) entre eux est alors fourni à la place du premier élément de couplage (2), dans lequel un troisième élément de couplage (2b) couplant les deuxième (20) et quatrième (40) engrenages à onde de déformation est fourni, et dans lequel les deuxième (2a) et troisième (2b) éléments de couplage sont reliés de manière solidaire en rotation.

2. Actionneur selon la revendication 1, dans lequel l'engrenage(7 ; 700) dispose d'au moins deux arbres d'entraînement (15, 25), dans lequel un arbre d'entraînement (15) est associé à la au moins une sous-unité d'entraînement (3 ; 4) située d'un côté de l'engrenage(7 ; 700) et l'autre arbre d'entraînement (25) est associé à la au moins une sous-unité d'entraînement (5 ; 6) située de l'autre côté de l'engrenage(7 ; 700), et dans lequel l'engrenage(7 ; 700) additionne les puissances d'entraînement des sous-unités d'entraînement (3 ; 4 ; 5 ; 6) vers la sortie (80).

3. Actionneur selon la revendication 1 ou 2, dans lequel
- le premier engrenage à onde de déformation (10) présente un premier générateur d'onde (11) qui peut être entraîné au moyen d'au moins une première sous-unité d'entraînement (3, 4), dans lequel le premier générateur d'onde (11) est agencé à l'intérieur d'un premier flexspline (12) relié de manière solidaire en rotation au premier carter d'engrenage (13), dans lequel le premier flexspline (12) présente une première denture extérieure,
- le deuxième engrenage à onde de déformation (20) présente un deuxième générateur d'onde (21) qui peut être entraîné au moyen d'une au moins une deuxième sous-unité d'entraînement (5, 6), dans lequel le deuxième générateur d'onde (21) est agencé à l'intérieur d'un deuxième flexspline (22) relié de manière solidaire en rotation au second carter (23), dans lequel le deuxième flexspline (22) présente une deuxième denture extérieure,
- l'élément de couplage (2) est réalisé sous la forme d'un spline circulaire d'un seul tenant ou d'un spline circulaire en plusieurs parties et le spline circulaire présente une ou plusieurs denture(s) intérieure(s) qui correspond(ent) aux première et deuxième dentures extérieures.

4. Actionneur selon l'une quelconque des revendications précédentes, dans lequel respectivement deux sous-unités d'entraînement (3 ; 4 ; 5 ; 6) sont fournies des deux côtés de l'engrenage (7 ; 700).

5. Actionneur selon l'une quelconque des revendications précédentes, dans lequel au moins un élément de verrouillage (B1, B2, B3, B4) agencé côté entraînement et conçu pour retenir au moins une des sous-unités d'entraînement est fourni de chaque côté de l'engrenage (7, 700) .

6. Actionneur selon l'une quelconque des revendications précédentes 1 à 4, dans lequel au moins un élément de verrouillage (B1 ; B2 ; B3 ; B4) agencé côté sortie et conçu pour empêcher un mouvement relatif entre respectivement un des deux carters (13 ; 23) et l'élément de couplage (2) est fourni de chaque côté de l'engrenage (7 ; 700).

7. Actionneur selon l'une quelconque des revendications précédentes 2 à 6, dans lequel quatre sous-unités d'entraînement sont fournies, dans lequel respectivement deux parmi lesdites quatre sous-unités d'entraînement (3, 4 ; 5, 6) sont associées à un arbre d'entraînement (15 ; 25) commun.

8. Actionneur selon l'une quelconque des revendications précédentes 2 à 6, dans lequel quatre sous-unités d'entraînement sont fournies et un arbre d'entraînement (15 ; 25 ; 16 ; 26) séparé est associé à chacune desdites sous-unités d'entraînement.

9. Actionneur selon l'une quelconque des revendications précédentes,
- dans lequel les premier (10) et troisième (30) engrenages à onde de déformation sont agencés à l'intérieur du premier carter (13) solidaire en rotation,
- dans lequel les deuxième (20) et quatrième (40) engrenages à onde de déformation sont agencés à l'intérieur du second carter (23) rotatif,
- dans lequel les premier (13) et second (23) carters présentent dans leur direction circonférentielle respective une pluralité d'évidements (18, 28), en particulier des fentes s'étendant dans la direction circonférentielle, à travers lesquels passent des éléments de liaison (200) permettant de relier de manière solidaire en rotation les deuxième (2a) et troisième (2b) éléments de couplage, de sorte que les éléments de liaison (200) sont agencés au moins partiellement à l'extérieur des carters (13, 23).

10. Actionneur selon l'une quelconque des revendications précédentes, dans lequel
- le troisième engrenage à onde de déformation (30) présente un troisième générateur d'onde (31) qui peut être entraîné au moyen d'une au moins première sous-unité d'entraînement (3, 4), dans lequel le troisième générateur d'onde (31) est agencé à l'intérieur d'un troisième flexspline (32) relié de manière solidaire en rotation au premier carter (13), dans lequel le troisième flexspline (32) présente une troisième denture extérieure,
- le quatrième engrenage à onde de déformation (40) présente un quatrième générateur d'onde (41) qui peut être entraîné au moyen d'une au moins deuxième sous-unité d'entraînement (5, 6), dans lequel le quatrième générateur d'onde (41) est agencé à l'intérieur d'un quatrième flexspline (42) relié de manière solidaire en rotation au second carter (23), dans lequel le quatrième flexspline (42) présente une quatrième denture extérieure,
- le deuxième élément de couplage (2a) est réalisé sous la forme d'un deuxième spline circulaire, dans lequel le deuxième spline circulaire présente une denture intérieure qui correspond aux première et troisième dentures extérieures,
- le troisième moyen de couplage (2b) est réalisé sous la forme d'un troisième spline circulaire, dans lequel le troisième spline circulaire présente une denture intérieure qui correspond aux deuxième et quatrième dentures extérieures.

11. Actionneur selon l'une quelconque des revendications 8 à 10, dans lequel respectivement deux générateurs d'onde (11; 21; 31; 41) sont agencés sur un arbre d'entraînement de moteur (15, 25) commun.

12. Actionneur selon l'une quelconque des revendications 8 à 10, dans lequel les générateurs d'onde (11 ; 21 ; 31 ; 41) sont respectivement agencés sur des arbres d'entraînement séparés.

13. Actionneur selon l'une quelconque des revendications 8 à 10, dans lequel
- les deux arbres d'entraînement (15 ; 25) communs sont respectivement réalisés sous la forme d'un arbre creux à travers lesquels passent respectivement un élément de support (17 ; 27) qui est relié de manière solidaire en rotation au carter (13 ; 23) respectif au niveau d'une de ses extrémités axiales (17a ; 27b),
- dans lequel un premier élément de support (17) est agencé à l'intérieur du premier carter (13) et le troisième générateur d'onde (31) est monté de manière rotative audit élément de support (17) et le troisième flexspline est relié de manière solidaire en rotation audit élément de support,
- dans lequel un second élément de support (27) est agencé à l'intérieur du second carter (23) et le quatrième générateur d'onde (41) est monté de manière rotative audit élément de support (27) et le quatrième flexspline est relié de manière solidaire en rotation audit élément de support.

14. Hélicoptère (500) comprenant un ou plusieurs actionneur(s) (1 ; 100 ; 1000) selon l'une quelconque des revendications 1 à 13.
